# EUROPÄISCHE PATENTSCHRIFT

(11) **EP 2 697 696 B1**
(45) Veröffentlichungstag und Bekanntmachung des Hinweises auf die Patenterteilung: **28.04.2021**
(21) Anmeldenummer: 12715547.1
(22) Anmeldetag: 28.03.2012
(51) Int. Cl.: B21F 3/02, B21F 3/04, G05B 19/18, G05B 19/4093

(54) **VERFAHREN UND SYSTEM ZUR PROGRAMMIERUNG DER STEUERUNG EINER MEHRACHSIGEN UMFORMMASCHINE SOWIE UMFORMMASCHINE**
PROCESS AND SYSTEM FOR THE PROGRAMMING OF THE CONTROL OF A FORMING MACHINE TOOL AND THE MACHINE TOOL ITSELF
PROCÉDÉ ET SYSTÈME POUR LA PROGRAMMATION DU CONTRÔLEUR D'UNE MACHINE DE FORMAGE MULTIAXE ET MACHINE DE FORMAGE

(30) Priorität: 12.04.2011 DE 102011007183
(43) Veröffentlichungstag der Anmeldung: 19.02.2014
(73) Patentinhaber: WAFIOS AG, 72764 Reutlingen (DE)
(72) Erfinder: WALKER, Thomas, 72766 Reutlingen (DE); SCHAD, Wolfgang, 72655 Altdorf (DE); WEIGMANN, Uwe-Peter, 72622 Nürtingen (DE)
(74) Vertreter: Patentanwälte Ruff, Wilhelm, Beier, Dauster & Partner mbB
(86) Internationale Anmeldenummer: PCT/EP2012/055518
(87) Internationale Veröffentlichungsnummer: WO 2012/139894

(56) Entgegenhaltungen:
- US-A1- 2008 270 927
- Allen Bradley: "ContolLogix Motion Module (Cat.No. 1756-M02AE,-M08SE),Programming Manual, Rockwell Automation", 28 February 2001 (2001-02-28), Allen Bradley, USA pages 1-225, * page 118; figure 6.2 Cam Editor *

## Beschreibung

### Technisches Gebiet

Die Erfindung bezieht sich auf ein Verfahren zur Programmierung der Steuerung einer Umformmaschine gemäß dem Oberbegriff von Anspruch 1, auf ein System zur Programmierung der Steuerung einer Umformmaschine gemäß dem Oberbegriff von Anspruch 13 sowie auf eine Umformmaschine gemäß dem Oberbegriff von Anspruch 14.

### Beschreibung des Standes der Technik

Umformmaschinen sind Werkzeugmaschinen, die mit Hilfe geeigneter Werkzeuge aus Halbzeugen wie Draht, Rohr, Band oder dergleichen in einem automatischen Fertigungsprozess kleinere oder größere Serien von Formteilen mit teilweise komplexer Geometrie überwiegend durch Umformen erzeugen können. Bei einer Umformmaschine kann es sich beispielsweise um eine Biegemaschine zum Erzeugen von Biegeteilen aus Drahtmaterial, Bandmaterial oder Rohrmaterial oder um eine Federmaschine zur Herstellung von Druckfedern, Zugfederkörpern, Schenkelfedern oder anderen federartigen Formteilen handeln. Eine Umformmaschine kann z.B. auch als Drahtstiftmaschine zur Massenfertigung von Schrauben, Nägeln, Nieten oder dergleichen ausgelegt sein.

Eine computernumerisch gesteuerte, mehrachsige Umformmaschine hat mehrere steuerbare Maschinenachsen, ein Antriebssystem mit mehreren elektrischen Antrieben zum Antreiben der Maschinenachsen und eine Steuereinrichtung zur koordinierten Ansteuerung von Arbeitsbewegungen der Maschinenachsen in einem Fertigungsprozess gemäß einem für den Fertigungsprozess spezifischen, computerlesbaren Steuerprogramm.

In diesem Steuerprogramm werden die zur Herstellung des Formteils vorgesehenen Arbeitsbewegungen und deren Abfolge in Form von NC-Sätzen hinterlegt, die auf unterschiedliche Weise (z.B. maschinennah oder maschinenfern) programmiert sein können. Das Steuerprogramm wird während des Fertigungsprozesses für jedes Formteil einer Serie abgearbeitet, in Steuersignale für die Antriebe umgesetzt und erzeugt dadurch koordinierte Achsbewegungen der Maschinenachsen.

Bei manchen Umformmaschinen gibt es die Möglichkeit, eine werkstückbasierte Programmierung vorzunehmen. Bei einer werkstückbasierten Programmierung können über eine Bedieneinheit Geometriedaten eingegeben werden, die die gewünschte Geometrie (Soll-Geometrie) des zu erzeugenden Formteils beschreiben. Bei der Fertigung von Biegeteilen aus Draht (z.B. Druckfedern, Schenkelfedern, Spiralfedern, sonstige Drahtbiegeteile) können z.B. der Drahtdurchmesser bzw. Drahtquerschnitt, der Durchmesser einer fertigen Feder, die Anzahl von Windungen einer Feder, die Steigung einer Feder, Biegewinkel und/oder Längen eines Biegeteils etc. eingegeben werden. Die Geometriedaten werden durch einen NC-Generator in eine Folge von NC-Sätzen des NC-Steuerprogramms umgewandelt. Damit ist es nicht mehr erforderlich, dass ein Bediener zur Erstellung des Steuerprogramms auf die Ebene der einzelnen NC-Sätze zugreift. Wenn kleinere Eingriffe am Programmablauf vorgenommen werden sollen, die sich nicht über diese Eingabeparameter oder entsprechende Korrekturwerte steuern lassen, muss ein Eingriff in das NC-Programm auf Ebene der NC-Sätze vorgenommen werden, um z.B. einen NC-Satz zu ändern oder einen neuen NC-Satz einzufügen. Hierzu sind beim Maschinenbediener Programmierkenntnisse erforderlich.

Das Patent EP 1 148 398 B1 beschreibt ein Eingabeverfahren für die Programmierung von Achsbewegungen und Ereignissen bei industriellen Steuerungen, die neben manuellen Eingabehilfsmitteln einen Bildschirm zum Visualisieren des Eingabeprozesses und zum Anzeigen resultierender Vorgänge aufweisen. Dabei werden (a) dem Anwender zunächst editierbare Leerdiagramme für Weg-Zeit-Verläufe für jeweils eine Achse und/oder Weg-Weg-Beziehungen für Paarungen von Leit- und Folgeachsen angezeigt, dann werden (b) die Weg- und Zeitgrenzen und/oder Weg- und Zeiteinheiten bedarfsweise festgelegt, danach werden (c) mit den Eingabehilfsmitteln die Weg-Zeit-Verläufe und/oder die Weg-Weg-Beziehungen in die Diagramme eingezeichnet, und dann wird von der Steuerung gemäß den Schritten (a) bis (c) das Steuerungsprogramm und/oder der Steuerungscode für den Produktionsprozess generiert, wobei sich editierte Änderungen automatisch auf das Steuerungsprogramm bzw. den Steuerungscode auswirken. Dieses Eingabeverfahren soll die Vorgehensweise bzw. Denkweise des Maschinenbauers unterstützen und somit die Eingabe für einen Maschinenbauer wesentlich vereinfachen.

Die US 2008/0270927 A1 beschreibt ein Verfahren und ein System zur Programmierung der Steuerung einer Federwindemaschine zur Herstellung von Federn. Das System stellt eine Schnittstelle zur Einstellung von Federparametern sowie eine Schnittstelle für Programmmodifikationen und eine Schnittstelle bereit, um mittels Verschieben von Linien Programmmodifikationen zu programmieren. Die verschiedenen Schnittstellen können an einer Anzeige eines Hauptcomputers angezeigt werden, der den Betrieb der Federwindemaschine steuert.

Das Dokument: Allen Bradley: "ControlLogix Motion Module (Cat.No. 1756-M02AE,-M08SE), Programming Manual, Rockwell Automation" v. 28. Februar 2001 (2001-02-28), Allen Bradley, USA, Seiten 1 bis 225 ist ein Handbuch zur Programmierung bestimmter Steuerungen zur Bewegungssteuerung (Motion Control) von Achsen.

### ZUSAMMENFASSUNG DER ERFINDUNG

Es ist eine Aufgabe der Erfindung, ein Verfahren zur Programmierung der Steuerung einer mehrachsigen Umformmaschine bereitzustellen, das besonders an die Bedürfnisse und die Sichtweise des Maschinenbedieners angepasst ist und eine intuitiv verständliche und flexible Programmierung erlaubt. Außerdem soll ein zur Durchführung des Verfahrens geeignetes System bereitgestellt werden.

Zur Lösung dieser Aufgabe stellt die Erfindung ein Verfahren mit den Merkmalen von Anspruch 1, ein korrespondierendes Computerprogrammprodukt nach Anspruch 15 sowie ein System mit den Merkmalen von

Anspruch 13 bereit. Weiterhin wird eine Umformmaschine mit den Merkmalen von Anspruch 14 bereitgestellt, wobei diese Umformmaschine Teil des Systems ist.

Vorteilhafte Weiterbildungen sind in den abhängigen Ansprüchen angegeben. Der Wortlaut sämtlicher Ansprüche wird durch Bezugnahme zum Inhalt der Beschreibung gemacht.

Mit dem Verfahren bzw. mit dem System sind Bewegungsabläufe durch einen Bediener ohne spezielle Kenntnisse im Bereich der CNC-Maschinenprogrammierung erstellbar.

Das Verfahren und das System kommen, im Gegensatz zu Programmiersystemen, bei denen die Geometrie des zu produzierenden Formteils eingegeben wird, ohne mathematisches Modell der Maschine und deren Werkzeuge aus.

Der durch die Bewegungsparameter definierte Bewegungsablauf einer Achsbewegung bezeichnet die Bewegung einer individuellen Maschinenachse ohne Bezug zu Bewegungen anderer Achsen. Der Bewegungsablauf wird charakterisiert durch positionsbezogene Bewegungsparameter, insbesondere durch die Startposition der Achsbewegung (Achsposition am Beginn der Achsbewegung), die Endposition der Achsbewegung (Achsposition am Ende der Achsbewegung), sowie einen oder mehrere Bewegungsparameter für die zwischen Startposition und Endposition zu durchlaufende Positionsänderung.

Mit Hilfe der Bewegungsparameter werden Bewegungsabläufe der Achsbewegungen programmiert, ohne dass durch die Eingabe auch die für den Bewegungsablauf erforderliche Dauer der Achsbewegung einzugeben ist. Die Dauer einer Achsbewegung muss daher bei der Programmierung nicht bekannt sein, sie ergibt sich als abgeleitete Größe aus den eingegebenen Bewegungsparametern. Bewegungsparameter im Sinne dieser Anmeldung sind somit positionsbezogene Parameter, aber keine direkt zeitbezogenen Parameter. Hier liegt ein wichtiger Unterschied z.B. zu Verfahren und Systemen, die nach dem Prinzip der "elektronischen Kurvenscheibe" arbeiten. Elektronische Kurvenscheiben sind im Einsatz, wenn die Position einer oder mehrerer Maschinenachsen von der Position einer Leitachse oder einer Königswelle abhängt, die den Takt der Gesamtbewegungsablaufs vorgibt. Dadurch wird für die Achsbewegungen ein zeitliches "Korsett" vorgegeben. Derartige unmittelbare zeitliche Zwänge entfallen bei Nutzung der beanspruchten Erfindung.

Vorzugsweise werden ausschließlich positionbezogene Bewegungsparameter genutzt bzw. angezeigt und abgefragt oder eingegeben, wobei sich die Dauer einer Achsbewegung als abgeleitete Größe aus den eingegebenen Bewegungsparametern ergibt.

Eine zeitliche Optimierung einzelner Achsbewegungen und/oder der Koordinierung von zwei oder mehr Achsbewegungen miteinander kann auf Basis der eingegebenen Achsbewegungen sehr flexibel gehandhabt werden. Die Programmierung von aufeinander folgenden Achsbewegungen ist dabei genauso einfach möglich wie die Programmierung von überlappenden Bewegungen.

In dieser Anmeldung steht der Begriff "Menü" für eine Form der interaktiven Benutzerführung, die es dem Bediener erlaubt, einen Befehl oder eine Eingabe aus einer vordefinierten Auswahl von Möglichkeiten auszuwählen und auszuführen. Dementsprechend bezeichnet der Begriff "Achsauswahlmenü" eine Auswahlliste mit allen vorhandenen programmierbaren Maschinenachsen.

Der Begriff "Maschinenachse" bezeichnet allgemein eine bewegliche Einrichtung, die durch mindestens einen Antrieb, z.B. einen elektromechanischen, elektrohydraulischen oder elektropneumatischen Antrieb, in mindestens einem mechanischen Freiheitsgrad bewegt werden kann. Es kann sich um eine translatorische Maschinenachse handeln, die beispielsweise einen linear beweglichen Schlitten bewegt, oder um eine rotatorische Maschinenachse, beispielsweise eine Spindel. Eine Maschinenachse kann entweder ein Werkzeug bewegen oder das Werkstück.

Die Startposition und die Endposition einer Achsbewegung können durch einen entsprechenden Startwert bzw. einen Endwert und eine zugehörige Winkeleinheit oder Längeneinheit definiert werden. Zur Definition einer Positionsänderung werden vorzugsweise ein Geschwindigkeitswert und ein Beschleunigungswert empfangen bzw. eingegeben oder erzeugt. Der Begriff "Geschwindigkeit" steht hier für die erste Ableitung der Position nach der Zeit, während der Begriff "Beschleunigung" für die zweite Ableitung der Position nach der Zeit bzw. für die Ableitung der Geschwindigkeit nach der Zeit steht.

Bei manchen Ausführungsformen werden der Geschwindigkeitswert und/oder der Beschleunigungswert nicht in absoluten Werten abgefragt oder eingegeben, sondern in relativen Werten, insbesondere in Prozent eines entsprechenden Geschwindigkeits-Maximalwerts bzw. Beschleunigungs-Maximalwerts. Dadurch wird die Programmierung stark vereinfacht, da der Bediener die absoluten Grenzen für Geschwindigkeit und/oder Beschleunigung der zu programmierenden Maschinenachse nicht kennen muss.

Bei bevorzugten Ausführungsformen ist es im Rahmen der Definition eines Bewegungsablaufs auch möglich, ein Bewegungsgesetz für die Positionsänderung zu definieren. Dazu wird vorzugsweise ein Bewegungsgesetz-Menü mit mehreren Optionen zur Eingabe eines Bewegungsgesetz-Typs angezeigt. Das Bewegungsgesetz-Menü kann insbesondere mehrere oder alle Bewegungsgesetz-Typen enthalten, die in der VDI-Richtlinie VDI 2143 Band 1 beschrieben sind. Ein Bewegungsgesetz-Typ kann z.B. ausgewählt sein aus der Gruppe mit einer quadratischen Parabel, einem Polynom fünfter Ordnung und einem Polynom achter Ordnung. Alternativ oder zusätzlich kann das Bewegungsgesetz-Menü auch andere Typen von Bewegungsgesetzen enthalten, z.B. andere Polynome (z.B. 8. Ordnung) und/oder eine Beschleunigung nach einem modifizierten Beschleunigungstrapez. Über die Definition eines geeigneten Bewegungsgesetzes ist es u.a. möglich, eine Optimierung des Bewegungsablaufs im Hinblick auf Ruckarmut bzw. möglichst geringe Ruckanteile zu erreichen. Je nachdem, welches Bewegungsgesetz gewählt wird, benötigt die Achsbewegung mehr oder weniger Zeit zwischen Startposition und Endposition, wobei typischerweise bei Bewegungen mit geringeren Ruckanteilen die Dauer der Achsbewegung länger wird.

In manchen Betriebsmodi erlaubt das System bzw. das Verfahren lediglich die Eingabe oder Veränderung des Startwerts und des Endwerts der Achsbewegung, wobei geeignete Geschwindigkeitswerte, Beschleunigungswerte und ein geeignetes Bewegungsgesetz ohne Eingriff des Bedieners automatisch ermittelt werden. Bei anderen Betriebsmodi bestehen mehr Freiheiten hinsichtlich der Gestaltung des Bewegungsablaufs, indem nicht nur der Startwert und der Endwert, sondern auch ein Geschwindigkeitswert, ein Beschleunigungswert und/oder ein geeignetes Bewegungsgesetz vom Bediener zur Eingabe abgefragt werden.

Bei manchen Maschinenachsen ist es erforderlich, dass deren Endwert am Ende eines Bewegungszyklus gleich dem Startwert in einem darauffolgenden Bewegungszyklus ist. Solche Maschinenachsen werden hier als "reversierende Achsen" bezeichnet und unterscheiden sich insoweit von "endlosen bzw. "nicht-reversierenden Achsen". Bei manchen Ausführungsformen ergibt sich eine Vereinfachung der Programmierung dadurch, dass bei Eingabe einer neuen Bewegung zunächst automatisch der Endwert auf den Startwert gesetzt wird. Die Eingabe wird dadurch für reversierende Achsen vereinfacht. Bei nicht-reversierenden Achsen kann der Endwert ausgehend von diesem Standardwert dann entsprechend auf den gewünschten endlichen Endwert geändert werden.

Vorzugsweise wird zur Anzeige und/oder Eingabe eines Bewegungsparameters ein Anzeige/Eingabefeld angezeigt, und der Bewegungsparameter wird in Form eines numerischen Eingabewertes oder in Form einer Auswahl einer Eingabe aus einer Liste von Eingabeoptionen empfangen oder angezeigt. Vorzugsweise wird dabei das Anzeige/Eingabefeld gemeinsam mit einer automatisch erstellten Einheit für den Eingabewert angezeigt. Bei einer rotatorischen Maschinenachse wird normalerweise eine Winkeleinheit, wie Grad, angezeigt. Bei translatorischen Maschinenachsen wird typischerweise eine Längeneinheit, wie Millimeter, Inch oder dergleichen, je nach ausgewählter Sprache oder ausgewähltem Land, angezeigt. Bei manchen Typen von Maschinenachsen, beispielsweise solchen mit Schubkurbelmechanik, kann zwischen verschiedenen Einheiten (Winkeleinheit oder Längeneinheit) gewählt werden.

Mit Hilfe des Achsbewegungs-Koordinierungsmenüs ist es möglich, auf intuitiv verständliche Weise die Bewegungsabläufe der Achsbewegungen von Maschinenachsen untereinander zu koordinieren. Bei der Koordinierung kann es sich insbesondere um eine rein zeitliche Koordinierung oder um eine durch eine oder mehrere Bedingungen gegebene Koordinierung handeln. Vorzugsweise sind eine oder mehrere der folgenden Eingabemöglichkeiten vorgesehen.

Um die Definition der zeitlichen Lage der Startposition direkt oder mittelbar über Verknüpfung an die Bewegung einer anderen Maschinenachse zu erreichen, wird vorzugsweise ein Bewegungsstartmenü mit mindestens einer Option zur Festlegung einer Bedingung für den Start einer Achsbewegung angezeigt oder angeboten. Sofern bereits für mindestens eine andere Maschinenachse eine Bewegung eingegeben wurde, werden vorzugsweise für eine Auswahl einer Verknüpfung zu einer bereits programmierten (eingegebenen) Achsbewegung alle bereits eingegebenen Achsbewegungen zur Auswahl angeboten. Weiter wird in diesem Fall vorzugsweise ein Eingabefeld angezeigt oder angeboten, welches es erlaubt, die Position der verknüpften Achsbewegung, bei der die aktuell programmierte Achsbewegung starten soll, zu definieren. Diese Position kann zwischen dem Startwert und dem Endwert der verknüpften Bewegung oder aber beim Startwert oder beim Endwert liegen.

Die Bedingung für den Start einer Achsbewegung kann sich ohne unmittelbaren Bezug auf die Bewegung einer anderen Maschinenachse direkt auf die Zeitachse beziehen und entsprechend definiert werden. Beispielsweise ist es bei manchen Varianten möglich, eine Option auszuwählen, wonach eine Bewegung direkt am zeitlichen Ursprung des Gesamtablaufs startet.

Um die Flexibilität für die Programmierung und für später eventuell erforderliche Korrekturen zu erhöhen, ist bei manchen Ausführungsformen die Anzeige eines Zeitkorrekturfeldes vorgesehen, um es dem Bediener zu ermöglichen, einen Zeitkorrekturwert einzugeben, der es erlaubt, die Startposition der aktuell programmierten Achsbewegung zeitlich früher oder zeitlich später starten zu lassen. Der Zeitkorrekturwert verschiebt somit die Startposition bezogen auf die Zeitachse, so dass durch Eingabe eines endlichen Zeitkorrekturwerts eine zeitliche Verschiebung der Startposition der aktuell programmierten Achsbewegung erzeugbar ist. Bei einer Ausführungsform steht eine negativer Eingabewert für einen zeitlich früheren Start, ein positiver Eingabewert startet die Bewegung entsprechend später. Als Standardwert ist in der Regel ein Nullwert (keine zeitliche Verschiebung) voreingestellt.

Bei manchen Ausführungsformen können eine oder mehrere digitale Maschinenfunktionen (M-Funktionen) genau wie eine Achsbewegung in den Ablauf eingefügt werden. Im Achsauswahl-Menü kann hierzu zusätzlich zu den programmierbaren Maschinenachsen eine entsprechende "Maschinenfunktions-Achse" angezeigt werden, in die das Auslösen einer Maschinenfunktion an geeigneter Stelle analog zur Eingabe einer Achsbewegung unendlich kurzer Dauer eingefügt werden kann. Bei Auswahl der "Maschinenfunktions-Achse" wird vorzugsweise ein Maschinenfunktions-Startmenü mit mindestens einer Option zur Festlegung (Definition) einer Bedingung für den Start einer Maschinenfunktion angezeigt oder angeboten. Aus den zur Verfügung stehenden Maschinenfunktionen, z.B. Schalten eines elektrischen Ausgangs, Aktivieren oder Überwachen einer Funktion etc. kann die gewünschte Maschinenfunktion z.B. über eine Identifizierung, wie eine Nummer oder ein Kürzel ausgewählt und dadurch eingegeben werden. Gegebenenfalls können mehrere, beispielsweise bis zu drei Maschinenfunktionen gleichzeitig (unter den gleichen Bedingungen) gestartet werden.

Eine weitere Flexibilisierung der Eingabe und eventuelle spätere Korrekturen sind bei manchen Ausführungsformen dadurch möglich, dass ein Bewegungsabfolgemenü mit mindestens einer Option zur Eingabe eines Bezugs zu einer anderen Achsbewegung angezeigt oder angeboten wird.

Eine Option kann beispielsweise darin bestehen, dass Achsbewegungen sequentiell programmiert werden können. In diesem Fall startet die Achsbewegung einer Maschinenachse, nachdem die Bewegung einer vorhergehenden Maschinenachse ganz oder teilweise erfolgt ist. Diese Option wird bei einem Ausführungsbeispiel als "Verkettung" von Bewegungen bezeichnet.

Gemäß einer anderen Option können Bewegungen interpolierend programmiert werden. Wird diese Option gewählt, so erfolgen die Bewegungen mehrerer Achsen zeitlich parallel zueinander in einem bestimmten Verhältnis untereinander. Die Bewegungsphasen interpolierter Bewegungen sind gleich lang. Interpolierende Bewegungen sind somit auf der Zeitachse gekoppelt, Wege und Beschleunigungen ergeben sich dabei aus den für die jeweilige Achse vorgegebenen Bewegungsparametern. Bei manchen Varianten kann auch zwischen mehreren Interpolationsarten gewählt werden, z.B. linearer Interpolation oder nicht-lineare Interpolation.

Als weitere Option kann vorgesehen sein, dass sich eine Maschinenachse während des gesamten Produktionszyklus mit konstanter Geschwindigkeit bewegt. Diese Option wird bei einem Ausführungsbeispiel als "durchlaufende" Achse bezeichnet.

Als alternative oder zusätzliche Option kann vorgesehen sein, dass mehrere aufeinanderfolgende Bewegungen einer Achse ohne Geschwindigkeitsänderung und/oder ohne Beschleunigungsänderung ineinander überführt werden. Diese Funktionalität kann auch als "Überschleifen" bezeichnet werden.

Ein Bewegungsabfolgemenü kann eine oder mehrere dieser Optionen und/oder andere Optionen enthalten, die es erlauben, einen Bezug zu einer anderen Achsbewegung zu definieren.

Eine sehr übersichtliche und intuitiv verständliche Möglichkeit der Eingabe ergibt sich bei manchen Ausführungsformen dadurch, dass als Reaktion auf eine Eingabe zur Auswahl einer zu programmierenden Maschinenachse ein korrespondierendes Achsbewegungsmenü und ein korrespondierendes Achsbewegungs-Koordinierungsmenü automatisch angezeigt werden, wobei vorzugsweise das Achsauswahlmenü gemeinsam mit dem Achsbewegungsmenü und dem Achsbewegungs-Koordinierungsmenü der ausgewählten Maschinenachse angezeigt werden. Somit wird für die zu programmierende Maschinenachse ein vollständiger Programmierdialog angeboten, wobei diese Maschinenachse auch im Kontext anderer noch zu programmierender oder bereits programmierter Maschinenachsen dargestellt werden kann. Die ausgewählte Maschinenachse kann im Auswahlmenü mit einer Kennzeichnung, beispielsweise durch einen Farbwechsel oder dergleichen, hervorgehoben werden, so dass der Maschinenbediener jederzeit mit einem Blick erkennt, welche Achse aktuell programmiert wird und gegebenenfalls wie die zu programmierende Achsbewegung im Kontext anderer Achsbewegungen einzuordnen ist.

Um die Anschaulichkeit weiter zu verbessern, ist bei manchen Ausführungsformen vorgesehen, dass als Reaktion auf eine Eingabe zur Definition von Bewegungsparametern die durch die Bewegungsparameter definierte Bewegung der Maschinenachse in dem Achsauswahlmenü grafisch angezeigt wird. Es hat sich dabei als günstig herausgestellt, wenn die durch die Bewegungsparameter definierte Bewegung in Form eines Feldes mit einem normierten Weg-Zeitdiagramm angezeigt wird, welches zeitrichtig bezogen auf eine allen Maschinenachsen gemeinsame Zeitachse angezeigt wird.

Besonders bevorzugt ist es, wenn Achsbewegungen und eventuelle Verknüpfungen zwischen Achsbewegungen in einer gemeinsamen Darstellung bezogen auf eine gemeinsame Zeitachse angezeigt werden. Dadurch kann der Maschinenbediener mit einem Blick einen Eindruck von dem bereits programmierten Bewegungsablauf erhalten.

Der Begriff "Zeitachse" bezeichnet hier eine Achse der grafischen Darstellung, auf der ein zeitproportionales Maß angezeigt wird. Dabei kann es sich um die absolute Zeit (beispielsweise in Millisekunden) handeln. Vorzugsweise wird jedoch ein relatives Zeitmaß gewählt und angezeigt. Bei bevorzugten Ausführungsformen bezieht sich die Zeitachse auf die zur Verfügung stehende maximale Arbeitsgeschwindigkeit der zu programmierenden Maschine. Bei dieser Skalierung gibt ein Zeitintervall auf der Zeitachse an, wie lange eine Bewegung dauern würde, wenn die Maschine bei ihrer maximalen Arbeitsgeschwindigkeit (100% Geschwindigkeit) arbeiten würde. Wird die Maschine während des Produktionszyklus langsamer betrieben, so ergibt sich entsprechend eine längere Absolutdauer von Bewegungsabläufen, wobei jedoch das Verhältnis der Dauern der Bewegungsabläufe in der Darstellung jeweils richtig erscheint. Die Nutzung einer relativen Zeitachse hat außerdem den Vorteil, dass der in Richtung der Zeitachse zur Verfügung stehende Platz auf der Anzeigeeinheit optimal genutzt werden kann.

Die "Arbeitsgeschwindigkeit" der Umformmaschine ist diejenige Geschwindigkeit, mit der die Schritte des Steuerprogramms insgesamt in eine Abfolge von Bewegungen der Maschinenachsen umgesetzt werden. Eine eingestellte Arbeitsgeschwindigkeit wirkt sich für alle programmierten Fertigungsschritte eines Fertigungsprozesses in gleicher Weise im Sinne einer Skalierung der programmierten Geschwindigkeit aus. In der Regel wird versucht, den Fertigungsprozess mit möglichst hoher Arbeitsgeschwindigkeit zu fahren, da die bei der Fertigung erzielbare Stückleistung unmittelbar von der Arbeitsgeschwindigkeit abhängt.

Manche Ausführungsformen bieten die Möglichkeit, dass ein aktueller (oder ein zu einem von einem Bediener gewählten Zeitpunkt vorliegender) Positionswert einer Achsbewegung bezogen auf eine gemeinsame Zeitachse in einem Anzeigefeld angezeigt werden kann, das beispielsweise als "aktueller Wert" gekennzeichnet sein kann. Der aktuelle Zeitpunkt kann beispielsweise durch einen senkrecht zur Zeitachse verlaufenden Strich dargestellt werden, der die Felder für die Eingabe der einzelnen Achsbewegungen kreuzt. Ein Bediener kann diesen Zeiger oder Cursor während der Eingabeprozedur auf der Zeitachse verschieben, um festzustellen, wie die aktuelle Position einer Achsbewegung zu dem durch die Zeigerposition definierten Zeitpunkt ist.

Bei manchen Varianten ist es möglich, die grafische Darstellung an der Anzeige in einen Kopfabschnitt, einen Rumpfabschnitt und einen Fußabschnitt (entlang der Zeitachse) zu teilen. Der Kopfabschnitt wird beim Programmstart einmalig ausgeführt, um Initialisierungen vorzunehmen. Die Angaben im Rumpfabschnitt werden n-mal ausgeführt, wobei n die Anzahl der erforderlichen Zyklusdurchläufe darstellt. Anweisungen im Fußabschnitt werden nach Erreichen der erforderlichen Zyklusdurchläufe einmalig ausgeführt, um einen Grundzustand wieder herzustellen. An der Anzeige wird dadurch der gesamte eingegebene Ablaufs noch deutlicher auf einen Blick erkennbar.

Die Erfindung bezieht sich auch auf ein System zur Programmierung der Steuerung einer Umformmaschine. Das System wird hier auch als "Programmiersystem" bezeichnet und umfasst Hardware-Anteile und Software-Anteile, die bei der Programmierung zusammenwirken. Die Umformmaschine hat mehrere steuerbare Maschinenachsen, eine Steuereinrichtung zur koordinierten Steuerung von Achsbewegungen der Maschinenachsen und eine mit der Steuereinrichtung zum Datenaustausch verbundene Bedieneinheit zur Bedienung der Umformmaschine. Der Bedieneinheit ist eine Anzeigeeinheit zugeordnet, die als Teil der Mensch-Maschine-Schnittstelle zum Visualisieren von Eingaben und Anzeigen dient und vom System gesteuert wird. Das System ist zur Durchführung des Verfahrens gemäß der Erfindung konfiguriert.

Bei manchen modernen Umformmaschinen, insbesondere bei solchen mit geregelten Maschinenachsen und Servoantrieben, kann die Erfindung mit den bereits vorhandenen Antrieben und Steuerungen umgesetzt werden. Die Fähigkeit zur Ausführung von Ausführungsformen der Erfindung kann in Form zusätzlicher Programmteile oder Programmmodule in die Bedienungssoftware bzw. Steuerungssoftware von computergestützten Steuereinrichtungen implementiert werden.

Daher betrifft ein weiterer Aspekt der vorliegenden Erfindung ein Computerprogrammprodukt, welches insbesondere auf einem computerlesbaren Medium gespeichert oder als Signal verwirklicht ist, wobei das Computerprogrammprodukt, wenn es in den Speicher eines geeigneten Computers geladen und von einem Computer ausgeführt ist bewirkt, dass der Computer bzw. eine durch den Computer gesteuerte Umformmaschine ein Verfahren gemäß der Erfindung bzw. einer bevorzugten Ausführungsform hiervon durchführt. Dadurch kann der Software-Anteil des Programmiersystems auf bereits vorhandenen oder neu hergestellten Maschinen installiert werden.

Diese und weitere Merkmale gehen außer den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele sind in den Zeichnungen dargestellt und werden im Folgenden näher erläutert.

### KURZBESCHREIBUNG DER ZEICHNUNGEN

- Fig. 1: zeigt in 1A eine schematische Gesamtansicht einer Umformmaschine zur Herstellung von Spiralfedern mit einigen Komponenten eines Systems zur Programmierung der Steuerung der Umformmaschine und in 1B ein Detail nur mit elektrischen und mechanischen Komponenten;
- Fig. 2 bis 6: zeigen jeweils Ansichten eines Ausschnitts der Bildschirmanzeige einer Bedieneinheit in aufeinanderfolgenden Phasen eines Eingabedialogs zur Programmierung der koordinierten Bewegung von Maschinenachsen; und
- Fig. 7: zeigt schematisch die Arbeitsweise einer Spiralfedermaschine mit einer während der Federherstellung verstellbaren Einzugseinrichtung.

### DETAILLIERTE BESCHREIBUNG BEVORZUGTER

### AUSFÜHRUNGSFORMEN

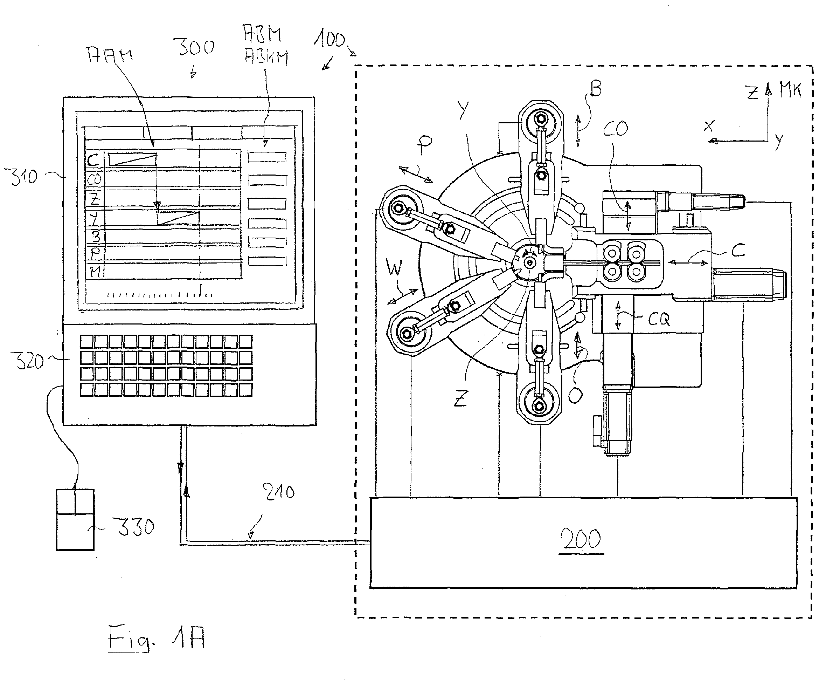

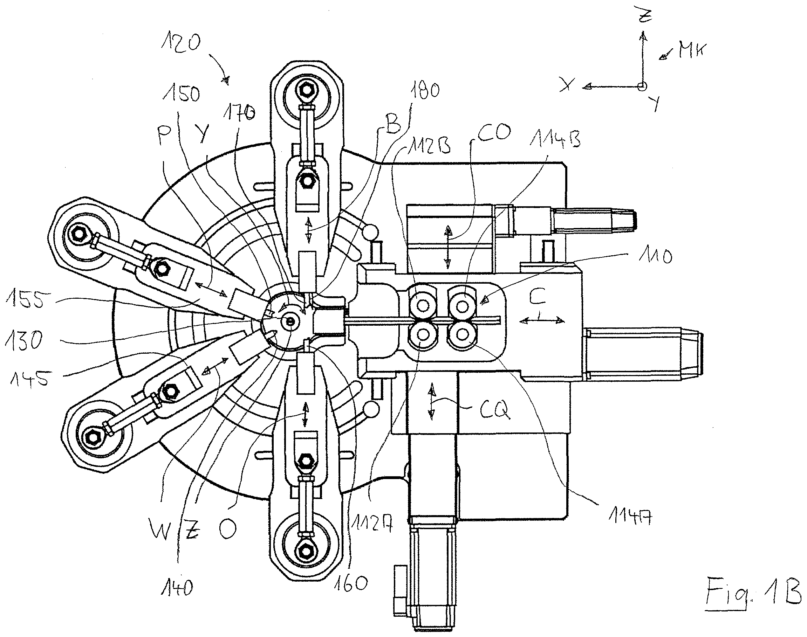

Die schematische Übersichtsdarstellung in Fig. 1A zeigt im rechten Teil wesentliche mechanische und elektromechanische Komponenten einer Umformmaschine 100, die zur Herstellung von Spiralfedern aus flachdrahtförmigem bzw. bandförmigem Halbzeug eingerichtet ist und dementsprechend auch als Spiralfedermaschine 100 bezeichnet wird. Figur 1B zeigt diese Komponenten aus Gründen der Übersichtlichkeit nochmals im Detail. Die computernumerisch gesteuerte Umformmaschine hat mehrere steuerbare Maschinenachsen, ein Antriebssystem mit mehreren elektrischen Antrieben zum Antreiben der Maschinenachsen und eine Steuereinrichtung 200 zur koordinierten Ansteuerung von Arbeitsbewegungen der Maschinenachsen.

Der Fertigungsprozess für eine Spiralfeder bestimmter Geometrie und Federeigenschaften wird dabei über ein für den Fertigungsprozess spezifisches, computerlesbares Steuerprogramm gesteuert, in welchem die zur Herstellung des Formteils vorgesehenen Arbeitsbewegungen der Maschinenachsen und deren Abfolge in Form von NC-Sätzen und/oder in Form von Weg/Zeit-Tabellen bzw. entsprechenden Datensätzen hinterlegt sind. Das System zur Programmierung der Umformmaschine bzw. der Bewegungen der Maschinenachsen hat eine im linken Figurteil von Fig. 1A schematisch gezeigte Bedieneinheit 300, die als Schnittstelle zum Maschinenbediener dient. Die Bedieneinheit hat eine Anzeigeeinheit 310 in Form eines grafikfähigen Bildschirms, der von einer nicht dargestellten Rechnereinheit angesteuert wird. An die Rechnereinheit können ein oder mehrere Eingabeeinheiten angeschlossen sein, beispielsweise eine Tastatur 320 und eine Maus 330. Wenn die Anzeigeinrichtung als Touchscreen ausgestaltet ist, können einige oder alle gesonderten Eingabeeinheiten auch entfallen.

Die Bedieneinheit 300 ist mit der Steuereinrichtung 200 über einen bidirektionalen Datenleitungspfad 210 verbunden, so dass Informationen von der Rechnereinheit der Bedieneinheit zur Steuereinrichtung übertragen werden können und Informationen aus der Steuereinrichtung, gegebenenfalls nach Bearbeitung, an der Anzeigeeinheit 310 angezeigt werden können.

Die Umformmaschine hat eine Einzugseinrichtung 110 mit zwei Paaren von übereinander angeordneten Einzugsrollen 112A, 112B bzw. 114A, 114B, durch deren paarweise gegenläufige Drehbewegung aufeinanderfolgende Abschnitte eines (von einem nicht gezeigten) Materialvorrat kommenden und durch eine ebenfalls nicht gezeigte Richteinheit geführten Flachdrahts bzw. Bandes mit numerisch gesteuertem Vorschubgeschwindigkeitsprofil in den Bereich einer Umformeinrichtung 120 zugeführt werden. Der Flachdraht bzw. das Band ist ein drahtförmiges Material mit einer im Vergleich zu seiner Dicke relativ großen Breite. Dieses Material wird im Folgenden allgemein als "Draht" bezeichnet.

Bei dem Ausführungsbeispiel hat die Umformmaschine ein mit Kleinbuchstaben x, y und z gekennzeichnetes, rechtwinkliges Maschinenkoordinatensystem MK mit einer vertikalen z-Achse und horizontalen x- und y-Achsen. Im Beispiel verläuft die x-Achse parallel zu der durch die Einzugseinrichtung 110 definierten Einzugsrichtung oder Zufuhrrichtung des noch ungebogenen Drahtes. Von den maschinenfesten Koordinatenachsen sind die nachfolgend noch erläuterten, geregelt angetriebenen Maschinenachsen zu unterscheiden, die jeweils mit Großbuchstaben bezeichnet werden. Beispielsweise ist die C-Achse für den Vorschub bzw. Einzug des noch ungebogenen Drahtes in Richtung Umformeinrichtung 120 zuständig.

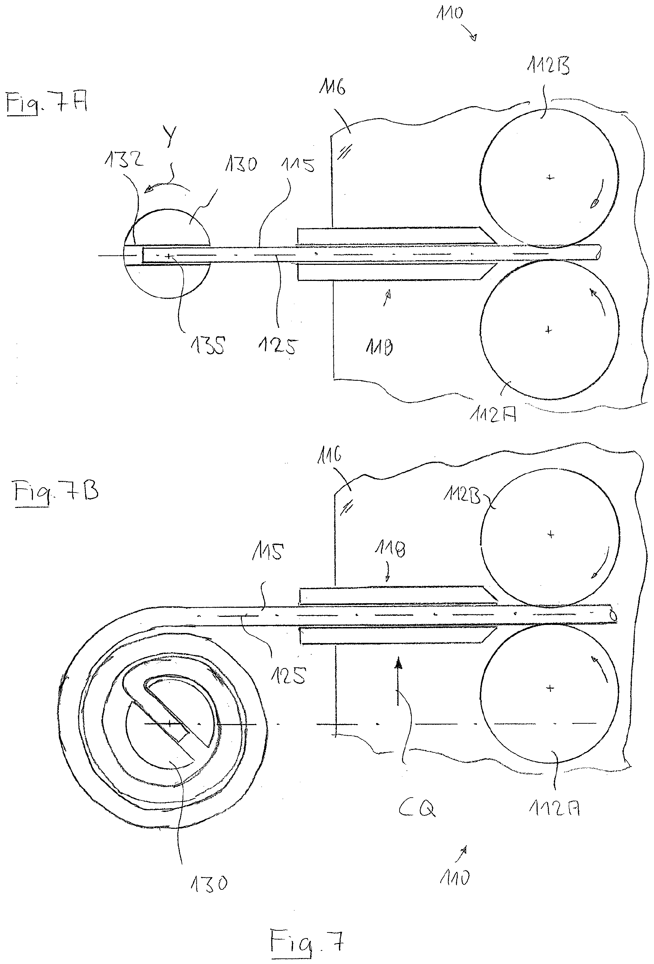

Der in den Arbeitsbereich der Umformeinrichtung 120 zugeführte Draht wird mit Hilfe von numerisch gesteuerten Werkzeugen der Umformeinrichtung zu einer ebenen Spiralfeder umgeformt. Bei der gezeigten Konfiguration sind folgende Werkzeuge und entsprechende Maschinenachsen vorgesehen:
Ein in Fig. 7 besonders deutlich dargestellter Wickeldorn 130 ist um eine horizontale, parallel zur y-Achse verlaufende Drehachse 135 drehbar und axial zu dieser Achse verschiebbar. Die für die Drehung des Wickeldorns zuständige Maschinenachse ist die Y-Achse, die axiale Verschiebung des Wickeldorns wird über die Z-Achse erreicht. Der Wickeldorn hat einen mittigen Querschlitz 132, in den ein Anfangsabschnitt des zugeführten Drahtes 115 vor dem Wickeln einer Spiralfeder eingeführt und durch Drehung des Wickeldorns geklemmt und dadurch bei der weiteren Drehung gehalten wird.

Ein Einfädelwerkzeug 140 mit einer keilförmigen Spitze wird zur Unterstützung des Einfädelns des Drahtanfangs in den Schlitz des Wickeldorns mit Hilfe eines ersten Schiebers 145 in den Bereich unmittelbar vor dem Wickeldorn geschoben. Die zugehörige, im Wesentlichen radial zur Y-Achse verlaufende translatorische Achse ist die W-Achse.

Ein Fixierwerkzeug 150 mit einer konkavzylindrischen Andrückkontur wird mit Hilfe eines zweiten Schiebers 155 in Richtung der um den Wickeldorn gewickelten Feder verschoben. Das Fixierwerkzeug dient in der Endphase des Wickelvorgangs dazu, die gewickelte Spiralfeder zusammenzudrücken bzw. zu fixieren, damit diese nicht aufspringt, wenn die Feder vom zugeführten Draht abgetrennt wird. Die im Wesentlichen radial zur Drehachse des Wickeldorns verlaufende translatorische Maschinenachse ist die P-Achse.

Am äußeren Ende der zur erzeugenden Spiralfeder ist im Beispielsfall ein mehrfach gebogener Abschlussabschnitt vorgesehen, der mit Hilfe zweier weiterer Maschinenachsen erzeugt wird. Ein erstes Biegewerkzeug 160 dient dabei als Matrize und wird vertikal von unten etwa tangential zur Drehachse des Wickeldorns Richtung Draht vorgeschoben. Die zugehörige translatorische Achse ist die O-Achse.

Von der gegenüberliegenden Seite wird gleichzeitig ein als Patrize gestaltetes zweites Biegewerkzeug 170 mit Hilfe einer weiteren translatorischen Achse (B-Achse) zur Formung des gebogenen Endabschnitts nach unten verschoben. Die B-Achse bewegt gleichzeitig ein neben dem zweiten Biegewerkzeug eingespanntes Schneidwerkzeug 180, das zum Abtrennen der Spiralfeder vom zugeführten Draht dient.

Die Walzen jedes Einzugwalzenpaares können wahlweise aufeinander zugestellt oder voneinander wegbewegt werden. Sind die Walzen auf minimalen Abstand aufeinander zugestellt, so greifen sie kraftschlüssig am dazwischen liegenden Drahtabschnitt an und dieser wird durch Drehung der Einzugswalzen in Richtung der Umformwerkzeuge gefördert. Ist der Drahtanfang in den Schlitz des Wickeldorns eingeführt und dieser so weit gedreht, dass er den Drahtanfang sicher einklemmt, können die Einzugswalzenpaare geöffnet werden, so dass der weitere Drahtvorschub dadurch erreicht wird, dass der sich drehende Wickeldorn den Draht in Richtung Wickeldorn zieht. Die Achse für die Walzenanpressung wird als CO-Achse bezeichnet und bewirkt eine lineare Bewegung der oberen Einzugswalzen 112B, 114B senkrecht zur Drahtzuführrichtung bzw. parallel zur z-Richtung.

Bei der gezeigten Ausführungsform ist die gesamte Einzugseinrichtung außerdem vertikal, d.h. parallel zur z-Richtung bzw. senkrecht zur Zufuhrrichtung des Drahts gesteuert verfahrbar. Die zugehörige translatorische Maschinenachse ist die CQ-Achse. Eine Nutzungsmöglichkeit wird im Zusammenhang mit Fig. 7 erläutert.

Der Bewegungsablauf der Maschinenachsen während eines Bewegungszyklus zur Fertigung einer Spiralfeder kann bei dieser Konfiguration beispielsweise wie folgt gesteuert werden.

Zunächst wird mit Hilfe der in ihrer Eingriffsstellung befindlichen und paarweise gegenläufig drehenden Einzugwalzen (C-Achse) der Draht in Richtung Wickeldorn gefördert, bis ein Drahtanfangabschnitt in den Querschlitz des Wickeldorns gleitet. Diese Einfädelbewegung kann durch das Einfädelwerkzeug 140 unterstützt werden. Wenn dessen Achse (W-Achse) programmiert ist, kann durch den Antrieb der W-Achse das Einfädelwerkzeug in der Phase vor Einfahren des Drahtanfangs in den Schlitz so nahe zum Wickeldorn gefahren werden, dass ein Ausweichen des herangeführten Drahtanfangs mechanisch verhindert wird, so dass dieser in jedem Fall in den Querschlitz am Wickeldorn einfährt. Bei anderen Prozessen kann diese Einführhilfe auch wegfallen.

Sobald der sich drehende Wickeldorn den Draht sicher ergriffen hat, können die oberen Einzugswalzen 112B, 114B gleichzeitig mittels der CO-Achse abgehoben werden, so dass der weitere Drahtvorschub allein vom drehenden Wickeldorn erzeugt wird. Es ist auch möglich, die Einzugswalzen in Eingriff mit dem Draht zu belassen und sie entsprechend dem gewünschten Vorschubprofil weiterzudrehen.

Ist der Aufwickelprozess nach einer vorgegebenen Anzahl von Drehungen des Wickeldorns abgeschlossen, wird der Wickeldorn zur Entspannung des Drahtmaterials etwas zurückgedreht. Außerdem wird durch eine Vorschubbewegung der P-Achse das Fixierwerkzeug 150 an den Außenumfang der Feder angelegt und sichert diese gegen Aufspringen bei den nachfolgenden Arbeitsschritten.

In der Endphase des Bewegungszyklus fahren die beiden komplementär geformten Biegewerkzeuge 170, 180 mit Hilfe der O-Achse und der B-Achse gleichzeitig gegenläufig aufeinander zu. Dabei wird zunächst durch einen Schnitt mittels des Schnittwerkzeugs 180 die fertig gewickelte Spiralfeder vom Draht abgetrennt. Unmittelbar danach bzw. zeitlich überlappend gestalten die Biegewerkzeuge 160, 170 in einem Umformvorgang den komplex gebogenen Endabschnitt der Spiralfeder. Danach wird der Wickeldorn mittels der Z-Achse zurückgezogen, wodurch die fertige Feder abgestreift wird.

Danach kann ein identischer nächster Bewegungszyklus beginnen, mit dem dann die nächste Spiralfeder erzeugt wird.

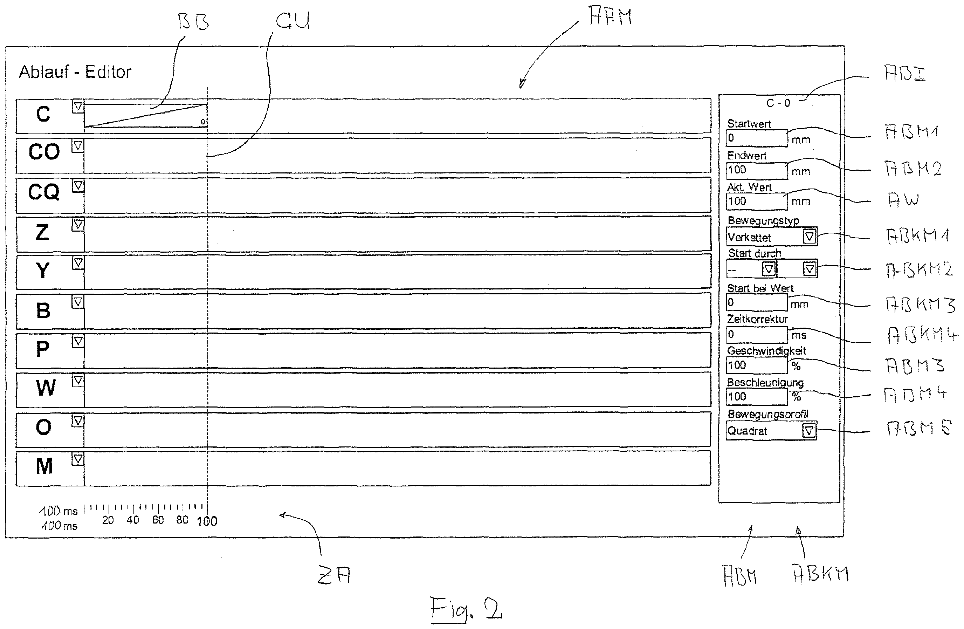

Anhand der Fig. 2 bis 6 werden nun an einem vereinfachten Beispiel einige aufeinanderfolgende Phasen der Programmierung der Steuereinrichtung für einen solchen oder einen ähnlichen Federerzeugungsprozess erläutert. Der Begriff "Programmierung" umfasst hierbei nicht nur die letzten Schritte bei der rechnergestützten Erstellung des NC-Steuerprogramms, sondern auch die vom Bediener vorzunehmenden Eingaben bzw. Auswahlvorgänge, mit denen Maschinenachsen ausgewählt und Bewegungsparameter sowie Koordinierungsparameter für die Achsenbewegungen eingegeben bzw. definiert werden können.

Im Beispielsfall wird der Programmierdialog über ein Programmmodul geführt, das als "Ablauf-Editor" bezeichnet und angezeigt wird und das es dem Bediener der Umformmaschine erlaubt, in einer intuitiv gut erfassbaren Eingabeumgebung alle für die Definition des Bewegungsablaufs der Maschinenachsen erforderlichen Eingaben vorzunehmen und/oder zu überprüfen. Über den Ablauf-Editor werden Daten erstellt und bearbeitet, die nach Abschluss der Eingabe über den Datenleitungspfad 210 der Steuereinrichtung 200 zur Verfügung gestellt werden, in der das für die Steuerung genutzte NC-Steuerungsprogramm entsprechender Eingaben erzeugt wird.

Der Ablauf-Editor des Programmiersystems erzeugt am Bildschirm der Anzeigeeinheit 310 mehrere übersichtlich strukturierte Menüs. Ein bei Auswählen des Ablauf-Editors immer angezeigtes Achsauswahlmenü AAM enthält grafische Symbole für die programmierbaren Maschinenachsen der Umformmaschine. Im Beispielsfall wird jede Maschinenachse durch ein horizontales Rechteckfeld symbolisiert, bei dem links ein Achsidentifikationssymbol (beispielsweise der Großbuchstabe C für die Einzugsachse) erscheint. Das unterste Eingabefeld des Achsauswahlmenüs repräsentiert in der Nomenklatur des Achsablaufmenüs die "M-Achse". Die M-Achse ist keine elektrisch-mechanische Maschinenachse. Über die "M-Achse" können digitale Schaltfunktionen genau wie Achsbewegungen in den Ablauf eingefügt werden.

Die Eingabefelder für alle programmierbaren Maschinenachsen (und die M-Achse) werden übereinander in einer gemeinsamen Darstellung bezogen auf eine gemeinsame Zeitachse ZA angezeigt. Die Zeitachse zeigt im Beispielsfalls ein der Ablaufzeit proportionales relatives Zeitmaß in der Einheit Millisekunden (ms) an.

Die Zahlenangabe "100" auf der Zeitachse ZA entspricht im Allgemeinen nicht einer absoluten Zeitdauer von 100 ms (in Echtzeit), sondern ist bezogen ist auf einen Referenzablauf, bei dem die Umformmaschine mit ihrer maximalen Arbeitsgeschwindigkeit, entsprechend einem Wert von 100% der Arbeitsgeschwindigkeit, arbeitet. Wird der Bewegungszyklus mit einer langsameren Arbeitsgeschwindigkeit abgearbeitet, entspricht die Angabe 100 ms einer entsprechend längeren Zeitdauer. Wird beispielsweise mit der Hälfte der maximalen Arbeitsgeschwindigkeit gearbeitet, einspricht die Zeitangabe "100 ms" einer tatsächlichen Dauer von 200 ms.

Rechts neben dem Achsauswahlmenü werden Eingabe/Anzeigefelder für Parameter eines Achsbewegungsmenüs ABM und eines Achsbewegungs-Koordinierungsmenüs ABKM übersichtlich untereinander angezeigt. Das Achsbewegungsmenü enthält Optionen zur Eingabe von Bewegungsparametern zur Definition eines Bewegungsablaufs der Achsbewegung einer ausgewählten Maschinenachse. Zum Achsbewegungsmenü gehören die mit ABM1 bis ABM5 gekennzeichneten Eingabe/Anzeigefelder. Zum Achsbewegungs-Koordinierungsmenü gehören die mit ABKM1 bis ABKM4 gekennzeichneten Eingabe/Anzeigefelder.

Oberhalb der genannten Anzeige-/Eingabefelder wird noch eine Achsbewegungsidentifikation ABI angezeigt, welche die Bezeichnung der aktuell angewählten Maschinenachse (hier P-Achse) und die Nummer der angewählten Bewegung (hier 0) angibt. Dabei steht die "0" für die erste Bewegung der angewählten Achse während eines Bewegungszyklus, die Nummer "1" würde für die zweite Bewegung der gleichen Achse stehen etc..

Im Anzeigefeld AW, das im Beispielsfall mit der Bezeichnung "Akt. Wert" gekennzeichnet ist, wird der aktuelle Positionswert einer ausgewählten Achsbewegung (hier die erste Bewegung C-0 der C-Achse) zu einem ausgewählten Zeitpunkt auf der Zeitachse ZA angegeben, wobei dieser ausgewählte Zeitpunkt durch die Position des Cursors CU angezeigt wird, der im Beispielsfall durch eine alle Achsfelder überkreuzende senkrecht gestrichelte Linie dargestellt ist.

Die Bedeutung der einzelnen Anzeige-/Eingabefelder der Menüs wird nachfolgend anhand eines exemplarischen Eingabedialogs im Zusammenhang mit den Fig. 2 bis 6 erläutert.

Der zu programmierende Bewegungsablauf soll mit einer Bewegung der C-Achse beginnen, also mit der Zufuhr eines neuen Drahtabschnitts durch die Einzugseinrichtung 110. Hierzu wird vom Bediener mittels Mausklick, über Tasten oder Tastenfolgen der Tastatur oder auf andere Weise zunächst die zu programmierende C-Achse ausgewählt. Sobald vom System eine Eingabe zur Auswahl der zu programmierenden C-Achse empfangen wurde, zeigt das System im Achsauswahlmenü AAM einen farblich hervorgehobenen, rechteckförmigen Bewegungsblock BB an, der die zu programmierende oder programmierte Achsbewegung repräsentiert. Der Index "0" im Bewegungsblock zeigt an, dass es sich um die erste Bewegung der C-Achse während des Bewegungszyklus handelt. Rechts werden automatisch die verfügbaren Eingabe/Anzeigefelder des Achsbewegungsmenüs ABM und des Achsbewegungs-Koordinierungsmenüs gemeinsam mit der Achsbewegungsidentifikation (hier "C - 0") angezeigt.

Über die Eingabefelder ABM1 für den Startwert und ABM2 für den Endwert werden nun die Startposition der Achsbewegung und die Endposition der Achsbewegung in einer vorgegebenen Positionseinheit definiert. Die Positionseinheit ist im Beispielsfall eines linearen Vorschubs eine Längeneinheit (hier mm) und repräsentiert den Drahtvorschub. Wurde in vorhergehenden Konfigurationsdialogen ein anderer Sprachkreis und/oder Maßkreis gewählt, könnte hier beispielsweise auch die Positionseinheit Inch für eine Längsbewegung erscheinen. Im Beispielsfall hat der Bediener einen Endwert von 100mm eingegeben.

Eine Besonderheit dieser Art der Eingabe für eine Programmierung besteht darin, dass die Zeitdauer für eine Achsbewegung nicht vorgegeben wird, sondern sich als abgeleitete Größe aus den vom Bediener eingegebenen und/oder vom Programmiersystem vorgegebene Einstellung ergibt. Hierzu sind in den Anzeige-/Eingabefeldern ABM3 bis ABM5 Parameter vorgegeben oder eingebbar, die die Positionsänderung während der Achsbewegung der programmierten Maschinenachse definieren. Im Beispielsfall soll die Achsbewegung eine Geschwindigkeit von 100% der vordefinierten Maximalgeschwindigkeit und eine Beschleunigung von 100% der vorgegebenen Maximalbeschleunigung haben und gemäß einem bestimmten Bewegungsprofil ablaufen. Dieses ist standardmäßig als Bewegungsgesetz gemäß einer quadratischen Parabel (Abkürzung "Quadrat") vorgegeben, um einen glatten Übergang zwischen Phasen unterschiedlicher Bewegungsgeschwindigkeit zu erhalten. Je nachdem, mit welchem Berechtigungsprofil der Maschinenbediener arbeiten darf, können die Werte für Geschwindigkeit, Beschleunigung und Bewegungsgesetz unveränderbar von der Maschine fest vorgegeben werden oder, beispielsweise in einem Expertenmodus, vom Bediener noch geändert werden.

Da es sich im Beispielsfall um die zeitlich erste Achsbewegung des gesamten Bewegungsablaufs bzw. Bewegungszyklus handelt, haben die angezeigten Werte in den Feldern ABKM1 bis ABKM4 des Achsbewegungs-Koordinierungsmenü hier noch keine Auswirkung.

Die gemäß Fig. 2 eingegebene Achsbewegung der C-Achse dauert bei maximaler Arbeitsgeschwindigkeit der Umformmaschine 100 ms. Dies ergibt sich aus der aktuellen Cursorposition, die dem Endwert der programmierten Achsbewegung (hier Endwert 100 mm) entspricht.

Die durch die Bewegungsparameter definierte Bewegung der C-Achse wird im Bewegungsblock BB in Form eines auf eine Referenzhöhe normierten Weg-Zeit-Diagramms grafisch angezeigt. Dieses Diagramm liegt bezogen auf eine gemeinsame Zeitachse ZA zeitrichtig zwischen Startzeit (0 ms) und 100 ms.

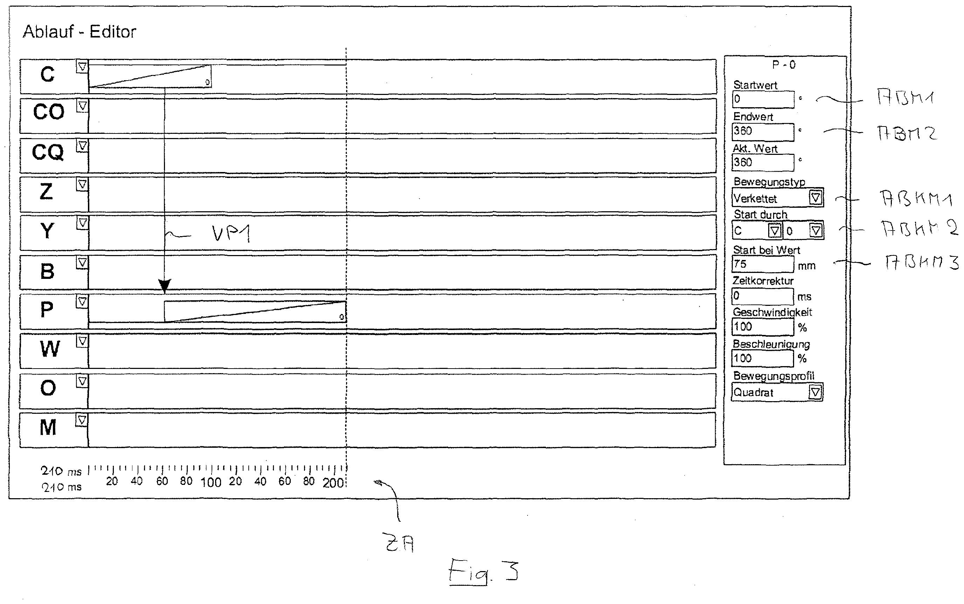

Fig. 3 zeigt die Anzeige des Ablauf-Editors bei der Eingabe zur Programmierung der P-Achse, deren Achsbewegung gemäß bestimmter, durch die Eingaben vorgebbarer Bedingungen an die bereits eingegebene Achsbewegung der C-Achse angehängt werden soll. Diese erste Bewegung der P-Achse (Achsbewegungsidentifikation P-0) ist über eine Drehbewegung zwischen einem Startwert 0° und einem Endwert 360° definiert.

Die P-Achse erzeugt bei der Umformmaschine 100 eine translatorische Bewegung des Fixierwerkzeugs, wobei der das Werkzeug tragende Schlitten über eine Schubkurbelmechanik angetrieben wird, die eine antriebsseitige Rotationsbewegung in eine abtriebsseitige lineare Bewegung des Schlittens umwandelt. Bei derartigen Maschinenachsen kann bei dem System gewählt werden, ob die Maschinenachse bezogen auf die rotierende Bewegung (z.B. der Kurbel) und somit in einer Winkeleinheit oder aber bezogen auf eine translatorische Bewegung (z.B. eines Pleuels) und somit in einer Längeneinheit (z.B. mm oder inch) eingeben bzw. programmiert werden soll. Ein Berechnungsprogramm ermittelt dann aus vorgegebenen mechanischen Daten (z.B. Kurbelradius, Pleuellänge, Getriebe etc.) automatisch die erforderliche Bewegung des Antriebs. Hier passt sich das Programmiersystem weitgehend der Verständniswelt des Maschinenbedieners an.

Die P-Achse soll gemäß den Vorstellungen des Maschinenbedieners zu dem Zeitpunkt starten, in welchem die C-Achse die Position 75 mm erreicht hat. Der Bediener gibt hierzu zunächst über die Felder ABM1, ABM2 Startwert und Endwert der Achsbewegung ein. Weiterhin wird im Feld ABKM1 aus einem Drop-out-Menü der entsprechende Bewegungstyp (hier Verkettung von Achsbewegungen) ausgewählt. Im Feld ABKM2 ("Start durch") kann mit Hilfe eines Drop-out-Menüs diejenige Achsbewegung ausgewählt bzw. eingegeben werden, mit der die aktuelle Bewegung der P-Achse verkettet werden soll. Hier werden automatisch alle bereits eingegebenen bzw. programmierten Achsbewegungen zur Auswahl angeboten. Im Beispielsfall ist es die erste Bewegung der C-Achse, gekennzeichnet durch Achssymbol C und Bewegungsnummer 0. Über das Feld ABKM3 ("Start bei Wert") wird noch diejenige Position der Achsbewegung der C-Achse angegeben, bei der die verkettete Achsbewegung der P-Achse beginnen soll (hier 75 mm). Entsprechend diesen Vorgaben erscheint an der Anzeige automatisch ein hier vertikaler erster Verknüpfungspfeil VP1, der dem Maschinenbediener intuitiv veranschaulicht, dass die programmierte Achsbewegung der P-Achse mit der Bewegung der C-Achse verkettet ist und dass die Bewegung der P-Achse startet, bevor die Bewegung der C-Achse abgeschlossen ist. Wie sich aus der Cursorposition ergibt, wären diese beiden verketteten Bewegungen nach ca. 240ms abgeschlossen, wenn die Maschine mit 100% Maschinengeschwindigkeit arbeiten würde.

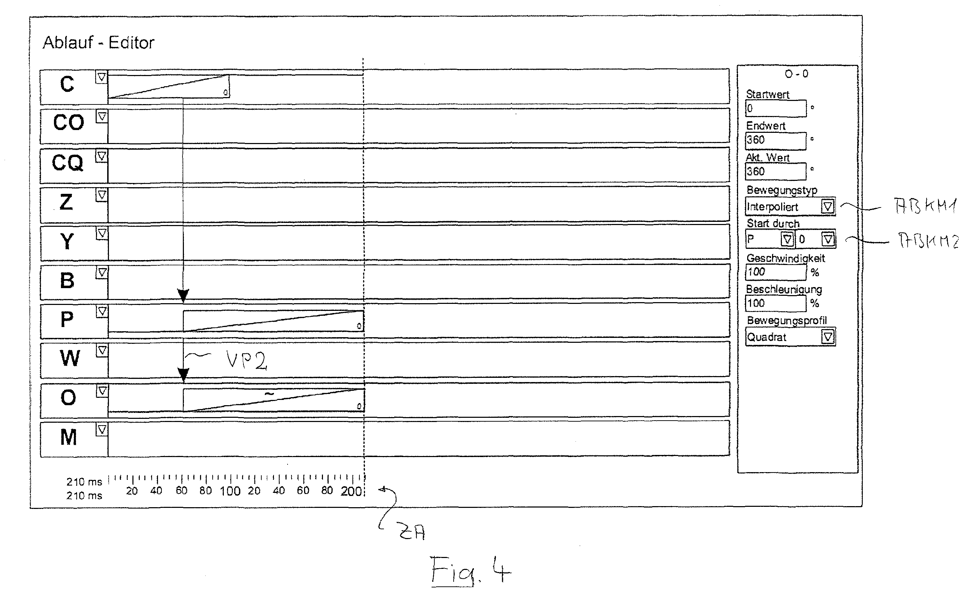

Gemäß dem im Beispielsfall zu programmierenden Bewegungsablauf soll zeitgleich mit der Achsbewegung der P-Achse auch die O-Achse bewegt werden. Die Eingabe der Parameter für diese Achsbewegung wird anhand von Fig. 4 erläutert. Der Bediener wählt zunächst beispielsweise mittels der Maus das Symbol für die O-Achse an, so dass rechts die Anzeige-/Eingabefelder des Achsbewegungsmenüs und des Achsbewegungs-Koordinierungsmenüs für die erste Bewegung der O-Achse (O - 0) automatisch angezeigt werden. Auch diese Achsbewegung soll durch eine vollständige Drehung zwischen Startwert 0° und Endwert 360° definiert werden. Für Geschwindigkeit, Beschleunigung und Bewegungsprofil sollen die vorgegebenen Standardeinstellungen gelten. Da es sich um eine interpolierende Bewegung mit der P-Achse handeln soll, wird im Feld ABKM1 der Bewegungstyp "Interpoliert" ausgewählt und im Feld ABKM2 der Start durch die erste Bewegung der P-Achse (P - 0) ausgewählt. An der Anzeige erscheint dann ein zweiter Verknüpfungspfeil VP2 vom Beginn des Bewegungsblocks der P-Achse zum Beginn des Bewegungsblocks der O-Achse. Die interpolierte Bewegung ist im Bewegungsblock der O-Achse mit einer Tilde (∼) gekennzeichnet.

Interpolierende Bewegungen zeichnen sich gemäß der Definition des Ausführungsbeispiels dadurch aus, dass sie zum gleichen Zeitpunkt starten, zum gleichen Zeitpunkt enden, dass Beschleunigungsphasen gleich lang sind, dass eventuell mögliche Konstantstartphasen ebenfalls gleich lang sind, und dass auch die Bremsphasen gleich lang sind. Interpolierende Bewegungen sind somit auf der Zeitachse miteinander gekoppelt, wobei die Absolutwerte für die Positionsänderungen (Achswege) und die Beschleunigungen automatisch entsprechend angepasst werden. Wird dabei die Bewegung einer Achse mit der Bewegung einer anderen Achse interpoliert, kann diese Art der Verknüpfung dazu führen, dass eine der miteinander interpolierenden Bewegungen oder beide interpolierten Achsbewegungen bezüglich ihrer absoluten Dauer so verändert werden, dass für beide interpolierenden Bewegungen ein für die Maschine optimales Bewegungsprofil resultiert.

Alternativ oder zusätzlich zu der hier erläuterten linearen Interpolation zwischen Maschinenachsen ist es bei anderen Ausführungsformen auch möglich, eine nicht-lineare Interpolation zwischen Maschinenachsen vorzunehmen.

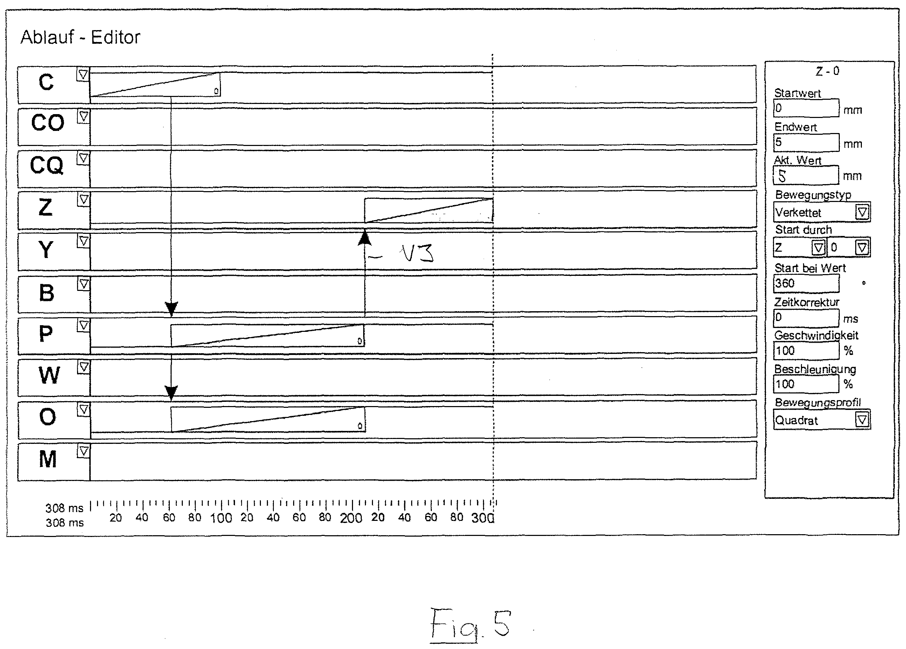

Im nächsten Schritt der Ablaufprogrammierung (Fig. 5) soll eine Achsbewegung der Z-Achse an die Achsbewegung der P-Achse gemäß dem dritten Verknüpfungspfeil V3 angehängt werden. Die erste Bewegung der Z-Achse (Z - 0) soll vom Startwert 0 mm zum Endwert 5 mm verlaufen und starten, wenn die P-Achse ihren Endwert von 360° erreicht. Es handelt sich um eine reversierende Achsbewegung.

Während der Bewegung der Z-Achse sollen im Beispielsfall drei digitale Schaltfunktionen aktiviert werden. Diese werden bedienerfreundlich im Prinzip genau wie eine Achsbewegung eingegeben bzw. programmiert. Dabei dient die unten erscheinende "M-Achse" dazu, den Zeitpunkt oder die Zeitpunkte der Aktivierung dieser Funktion sowie die Art der Funktion zu definieren. Da hierzu keine tatsächliche Achsbewegung zu programmieren ist, werden die Anzeige/Eingabefelder des Achsbewegungsmenüs und das den aktuellen Wert anzeigende Feld nicht angezeigt. Zusätzlich zu den Anzeige/Eingabefelder ABKM2, ABKM3 und ABKM4 des Achsbewegungs-Koordinierungsmenüs werden Anzeige/Eingabefelder M1, M2 und M3 zur Definition von Maschinenfunktionen angezeigt.

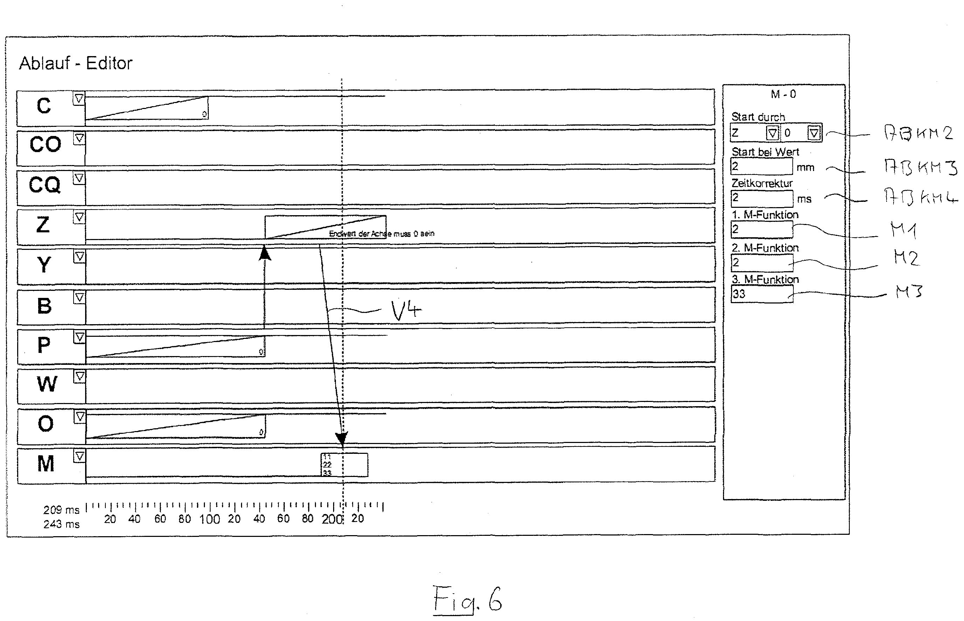

Gemäß der Vorgehen in Fig. 6 werden bei der Position 2 mm der Z-Achse drei digitale Schaltfunktionen (M-Funktionen) mit der Kennzeichnung 2 (doppelt) bzw. 33 eingefügt. Gemäß dem gewünschten Ablauf sollen diese allerdings nicht genau dann getriggert bzw. ausgelöst werden, wenn die Z-Achse die Position 2 mm erreicht, sondern die Aktivierung soll gegenüber dem Erreichen dieser Position zeitverzögert um 2 ms später erfolgen. Dafür wird im Eingabe-/Anzeigefeld ABKM4 (Zeitkorrektur) der Wert "2" (ms) eingegeben. Der Empfang dieser Eingabe führt zu einer entsprechenden Verknüpfung, die durch einen schräg verlaufenden vierten Verknüpfungspfeil VP4 grafisch dargestellt wird. Aufgrund der zeitlichen Verzögerung der Ansteuerung erscheint der vierte Verknüpfungspfeil VP4 schräg. In dem Funktionsblock FB erscheinen die Nummern der entsprechenden Maschinenfunktionen.

Über einen digitalen Funktionsblock können beispielsweise digitale Aktoren wie Magnete, Leuchten, Aktoren für Sortierklappen oder dergleichen angesteuert werden. Es ist auch möglich, Triggersignale für Sensoren auszulösen oder beispielsweise den Messzeitpunkt einer integrierten Messung festzulegen.

Wenn alle Eingaben und/oder Auswahlaktionen für einen Bewegungsablauf abgeschlossen sind, wird ein Datensatz generiert, der den gesamten Bewegungsablauf der programmierten Bewegung repräsentiert. Der Datensatz kann beispielsweise in Form einer Weg-Zeit-Tabelle generiert und an die Steuereinrichtung übertragen werden. Für jeden während des Gesamtablaufs aktiven Antrieb kann ein solcher Datensatz, der einem s-t-Diagramm entspricht, generiert werden. Die Berechnung dieser Datensätze kann zeitnah zur Eingabe einer Achsbewegung oder nach Abschluss der gesamten Eingabe für alle Maschinenachsen durchgeführt werden.

Nachträgliche Korrekturen oder Optimierungen am Bewegungsablauf sind mit Hilfe des Ablauf-Editors schnell und einfach möglich. Beispielsweise kann die zeitliche Abfolge der einzelnen Bewegungsabläufe geändert werden, um eine Nebenzeitoptimierung durchzuführen, d.h. um ohne Veränderung der für die Form des Umformteils maßgeblichen Parameter das Zusammenspiel der Bewegungen insgesamt so zu optimieren, dass die Taktzeit verkürzt und damit die Produktivität gesteigert werden kann. Wenn der Ablauf zunächst so eingerichtet ist, dass die gewünschte Teilegeometrie entsteht, kann der Gesamtablaufs nachfolgend beispielsweise durch Ineinanderschieben von Achsbewegungen und/oder durch das Anhängen einer Achsbewegung an eine andere Achsbewegung optimiert werden. Insbesondere kann eine Ablaufoptimierung durch "Verschieben" von programmierten Achsbewegungen in Bezug auf die Zeitachse erfolgen, wobei die Verschiebung beispielsweise mit Hilfe einer Maus oder, bei berührungsempfindlichen Anzeigeinrichtungen (touch screen) mit dem Finger erfolgen kann.

Das Programmierverfahren und das Programmiersystem bieten dem Maschinenbediener große Flexibilität bei der Gestaltung des programmierten Bewegungsablaufs. Dadurch kann es prinzipiell vorkommen, dass ein Bewegungsablauf programmiert wird, bei dessen Ablauf ein oder mehrere Antriebe des Antriebssystems zeitweise überlastet sein können. Beispielsweise kann ein Bewegungsablauf so erstellt werden, dass ein Antrieb innerhalb eines Bewegungszyklus mehrfach beschleunigt und abgebremst wird, so dass es unter Umständen zu einer Überhitzung des Antriebs kommen könnte, bei der ggf. eine antriebsinterne Sicherung greift und den Antrieb abschaltet. Zur Vermeidung derartiger Probleme ist bei bevorzugten Varianten vorgesehen, dass nach Abschluss der Programmierung eines Bewegungsablauf ein Testlauf durchgeführt wird, dass während des Testlaufs Antriebe des Antriebssystems auf Überlastung überwacht werden, dass ein Überlastungssignal erzeugt wird, wenn ein Antrieb während des Testlaufs einen Überlastungszustand durchläuft und dass eine Optimierung des programmierten Bewegungsablaufs auf Basis des Überlastungssignals eingeleitet wird. Die Optimierung sieht in diesem Fall vor, dass das Steuerprogramm so geändert wird, dass bei einem darauf basierenden optimierten Bewegungsablauf die ermittelten Überlastungszustände nicht mehr auftreten.

Bei manchen Varianten wird auf Basis des Überlastungssignals eine Überlastungsanzeige angesteuert, die vorzugsweise antriebsselektiv funktioniert und dementsprechend dem Bediener anzeigt, welcher Antrieb in welcher Phase seiner Bewegungen ein Überlastzustand durchlaufen hat. Das kann beispielsweise dadurch erreicht werden, dass in der Bildschirmanzeige mit dem Ablauf-Editor derjenige Bewegungsblock einer Achse farblich und/oder durch Blinken o.dgl. hervorgehoben wird, bei dem ein Überlastungszustand aufgetreten ist.

Der Bediener kann dann reagieren und den Bewegungsablauf so modifizieren, dass die Ursache für den Überlastungszustand beseitigt wird. Dazu kann beispielsweise die Arbeitsgeschwindigkeit reduziert werden, so dass der gesamte Bewegungszyklus langsamer durchlaufen wird. Es ist auch möglich, das Bewegungsgesetz des gefährdeten Antriebs zu ändern, wodurch dann eventuell nur die Zeitdauer für die gefährdete Bewegung verlängert wird.

Bei einer bevorzugten Ausführungsform wird die Optimierung des Bewegungsablaufs ohne Eingriff des Bedieners vom System durchgeführt, indem der Bewegungsablauf als Reaktion auf ein Überlastsignal automatisch derart verändert wird, dass unter Beibehaltung des durch den Bewegungsablauf erzeugten Arbeitsergebnisses (beispielsweise Formteil bestimmter Geometrie) der gesamte Bewegungsablauf ohne Auftreten eines Überlastungszustandes durchlaufen wird. Die Steuerung kann hierzu beispielsweise die Arbeitsgeschwindigkeit mit Auswirkung auf den gesamten Prozess reduzieren oder beim betroffenen Antrieb und der betroffenen Bewegung die Beschleunigung und/oder das Bewegungsgesetz ändern.

Zur Überwachung eventueller Überlastungen von Antrieben ist bei manchen Ausführungsformen vorgesehen, dass das Überwachungssystem das Antriebsmoment bzw. den Antriebsmomentenverlauf der Antriebe innerhalb eines Bewegungszyklus überwacht und dass ein Überlastungssignal erzeugt wird, wenn bei einem Antrieb temporär das Antriebsmoment über dem zulässigen Nennmoment des Antriebs liegt. Die Ermittlung des Antriebsmoments kann über vorhandene Auswertungsmöglichkeiten des Antriebs erfolgen oder indirekt anhand anderer geeigneter Parameter, wie beispielsweise der Leistungsaufnahme des Antriebs.

Zur Durchführung des Testlaufs wird normalerweise nach Abschluss der Programmierung des Bewegungsablaufs ein Testteil gefertigt, so dass die Antriebe bei einem realen Bewegungsablauf überwacht werden können. Gegebenenfalls können auch mehrere Testteile gefertigt werden, um die Aussagekraft der Überwachung zu verbessern und zufällige Überlastungsanzeigen auszuschließen.

Es ist auch möglich, einen "virtuellen Testlauf" durchzuführen, wobei dann auf Basis verfügbarer Daten über den Bewegungsablauf und relevanter Werte des Antriebssystems ermittelt wird, ob ein Antrieb während des Bewegungsablaufs voraussichtlich in kritischer Weise belastet wird. Dabei kann der Zusammenhang *̅M̅*̅ = *̅J̅*̅ * α zwischen Drehmoment *̅M̅*̅, Trägheitsmoment *̅J̅*̅ und Winkelbeschleunigung α genutzt werden. Da das Trägheitsmoment *̅J̅*̅ bekannt ist, kann aus dem Bewegungsprofil die effektive Winkelbeschleunigung α_{eff} und somit das effektive Drehmoment *̅M̅*̅_{eff} ermittelt und mit dem Nenn-Drehmoment *̅M̅*̅_{N} verglichen werden. Eine Korrektur kann beispielsweise dann eingeleitet werden, das effektive Drehmoment das Nenn-Drehmoment erreicht oder überschreitet, wenn also die Bedingung *̅M̅*̅_{eff} ≥ *̅M̅*̅_{N} vorliegt.

Anhand von Fig. 7 wird eine Nutzungsmöglichkeit der verstellbaren Einzugseinrichtung 110 erläutert, welche mit Hilfe der geregelten, translatorischen CQ-Achse senkrecht zur Einzugsrichtung bzw. Zufuhrrichtung gesteuert linear verfahrbar ist. Die Fig. 7A und 7B zeigen jeweils rechts die austrittsseitigen Einzugsrollen 112A, 112B der Einzugseinrichtung 110. Diese sind an einen mit Hilfe der CQ-Achse vertikal verfahrbaren Träger 116 gelagert. In Förderrichtung hinter den Einzugsrollen ist am Träger 116 noch eine Führungseinrichtung 118 mit zwei parallelen Führungsschienen angebracht, die den geförderten Draht beim Vorschub in Richtung der Umformeinrichtung 120 geradlinig führen.

Links ist jeweils der mit einem Querschlitz 132 versehene Wickeldorn 130 gezeigt, der mit Hilfe der Y-Achse um die Drehachse 135 des Wickeldorns in einer vorgebbaren Drehrichtung gedreht werden kann und zusätzlich mit Hilfe der Z-Achse parallel zur Drehachse 135 verschoben werden kann, um beispielsweise durch Rückzug des Wickeldorns die fertige Feder abzustreifen.

Fig. 7A zeigt die Einzugseinrichtung 110 in einer Grundstellung, bei der die durch die vertikale Position der Einzugsrollen und der Führungsschienen definierte Zufuhrrichtung 125 exakt radial zur Drehachse 135 des Wickeldorns verläuft. Diese Grundstellung wird beispielsweise für das Einfädeln des vorderen Drahtendes in den Querschlitz 132 angefahren, wozu der Wickeldorn so gedreht wird, dass der Querschlitz 132 im Wesentlichen parallel zur Zufuhrrichtung (bzw. parallel zur x-Achse des Maschinenkoordinatensystems MK) verläuft.

Wenn nach Abschluss des Einfädelns durch Drehung des Wickeldorns die Erzeugung von Windungen der Spiralfeder beginnt, ändert sich allmählich mit fortschreitender Drahtzufuhr und zunehmender Windungszahl der Außendurchmesser der Spiralfeder. Würde in diesem Fall die Einzugseinrichtung 110 in ihrer Grundstellung verbleiben, so würde der Draht nach Austritt aus der Führungseinrichtung 118 mit zunehmendem Durchmesser der Spiralfeder immer stärker auf Biegung beansprucht, bevor er sich an den Außenbereich der vorhergehenden Wicklung anlegt.

Um eine plastische Deformation des Drahts in diesem Bereich zu vermeiden, wäre es möglich, den Abstand zwischen der Einzugseinrichtung bzw. den Führungsschienen und dem Wickeldorn im Verhältnis zum maximalen Durchmesser der Spiralfeder so groß zu halten, dass bei allen Durchmessern nur eine leichte elastische Verbiegung des Drahts ohne plastische Verformung eintritt.

Mit Hilfe des während der Entstehung der Spiralfeder verschiebbaren Einzugs kann erreicht werden, dass der Draht zwischen Austritt aus der Führungseinrichtung 118 und dem Anlegen an die Außenseite der sich entwickelnden Spiralfeder praktisch nicht verbogen wird. Bei dem Ausführungsbeispiel ist die Vorschubbewegung der CQ-Achse während des Wickelns der Spiralfeder so programmiert, dass die durch die Einzugseinrichtung 110 definierte Zufuhrrichtung 125 des Drahts in jeder Phase des Aufwickelns im Wesentlichen tangential zum Außenumfang der sich entwickelnden Spiralfeder verläuft. Wie in Fig. 7B erkennbar, wird dadurch der Draht zwischen Austritt aus der Führungseinrichtung 118 und dem Aufwickeln am Umfang der Spiralfeder praktisch nicht verbogen, so dass plastische Deformation in diesem Bereich zuverlässig vermieden wird.

Ein Vorteil dieser Ausgestaltung liegt darin, dass Federn mit hoher Qualität erzeugt werden können. Ein anderer Vorteil besteht darin, dass ein sehr platzsparender kompakter Aufbau möglich ist, da der Austritt des Einzugssystems (hier Austritt aus den Führungsschienen 118) sehr nahe an den Bereich des Wickeldorn herangebracht werden kann.

Bei anderen, nicht bildlich dargestellten Ausführungsformen ist die Einzugseinrichtung als Ganzes um eine parallel zur Drehachse 135 des Wickeldorns 130 verlaufende Schwenkachse mittels einer entsprechenden Maschinenachse gesteuert verschwenkbar. Auch dadurch kann erreicht werden, dass der zugeführte Draht jeweils im Wesentlichen tangential zu der im Durchmesser immer größer werdenden Windung der Spiralfeder geführt wird.

Die Anmeldung offenbart somit eine Umformmaschine mit einer Einzugseinrichtung zum Einziehen eines langgestreckten Werkstücks (hier eines Drahts) in den Bereich der Umformeinrichtung, wobei die Lage und/oder Orientierung der Einzugseinrichtung eine Zuführrichtung definiert und die Einzugseinrichtung mit Hilfe einer gesteuerten Maschinenachse (hier CQ-Achse) verstellbar ist. Der verstellbare Einzug kann beim Einrichten der Maschine für einen Umformprozess genutzt werden, um die Einzugsrichtung günstig in Bezug auf die Werkzeuge der Umformeinrichtung auszurichten. Besondere Vorteile ergeben sich dadurch, dass die Maschine so gesteuert werden kann, dass der Einzug während der Erzeugung der Feder verstellt wird, beispielsweise um die Einzugseinrichtung an einen während der Federerzeugung sich ändernden Windungsdurchmesser anzupassen. Die Anpassung kann insbesondere so erfolgen, dass die Zufuhrrichtung immer im Wesentlichen tangential zu der gerade entstehenden Wicklung verläuft.

Anhand von Fig. 7 wurden einige Vorteile am Beispiel der Erzeugung einer ebenen Spiralfeder erläutert. Ein verstellbarer Einzug kann jedoch auch bei anderen Federmaschinen vorgesehen sein, beispielsweise bei einer Federmaschine zur Erzeugung von Schraubenfedern durch Federwinden, also bei einer Federwindemaschine. Hier kann eine verstellbare Einzugseinrichtung z.B. dann genutzt werden, wenn Schraubenfedern mit einem längs der Axialrichtung der Feder variierendem Wicklungsdurchmesser erzeugt werden sollen, beispielsweise konische Schraubenfedern oder tonnenförmige Schraubenfedern. Auch hier kann die durch die Einzugseinrichtung definierte Zufuhrrichtung durch Verschieben der Einzugsrichtung z.B. in einer senkrecht zur Zuführrichtung verlaufenden Verschiebungsrichtung oder Verschwenken der Einzugseinrichtung um eine parallel zur Federachse verlaufende Schwenkachse allmählich so verändert werden, dass die Zufuhrrichtung immer im Wesentlichen tangential zu der gerade entstehenden Wicklung verläuft, auch wenn sich der Wicklungsdurchmesser während der Herstellung der Feder ändert.

Die besonders anhand von Fig. 7 erläuterte gesteuert verstellbare Einzugseinrichtung ist im Zusammenspiel mit dem Programmiersystem nützlich. Es handelt sich jedoch gleichwohl um eine von diesem System unabhängige vorteilhafte technische Maßnahme, die insbesondere auch bei Umformmaschinen ohne das besondere Programmiersystem realisiert werden kann.

Das Verfahren und das System zur Programmierung der Steuerung wurden beispielhaft im Zusammenhang mit einer mehrachsigen Umformmaschine erläutert. Die Anwendungsmöglichkeiten des Verfahrens und des Systems sind allerdings nicht darauf beschränkt. Grundsätzlich ist eine Anwendung auch bei anderen, mit mehrerer steuerbaren Maschinenachsen ausgestatteten, numerisch gesteuerten Bearbeitungsmaschinen oder Verarbeitungsmaschinen möglich.

## Patentansprüche

1. Verfahren zur Programmierung der Steuerung einer Umformmaschine, wobei die Umformmaschine mehrere steuerbare Maschinenachsen, eine Steuereinrichtung zur koordinierten Steuerung von Achsbewegungen der Maschinenachsen und eine Bedieneinheit (300) mit einer zugeordneten Anzeigeeinheit (310) zur Bedienung der Umformmaschine aufweist, **dadurch gekennzeichnet, dass** das Verfahren folgende Schritte aufweist:
a) Anzeigen eines Achsauswahlmenüs (AAM) mit graphischen Symbolen für Maschinenachsen der Umformmaschine;
b) Empfangen einer Eingabe zur Auswahl einer zu programmierenden Maschinenachse;
c) Anzeigen eines Achsbewegungsmenüs (ABM) mit Optionen zur Eingabe von positionsbezogenen Bewegungsparametern zur Definition eines Bewegungsablaufs der Achsbewegung der ausgewählten Maschinenachse;
d) Empfangen von Eingaben zur Definition von positionsbezogenen Bewegungsparametern;
wobei die Schritte a) bis d) für zwei oder mehr Maschinenachsen zur Definition von zwei oder mehr Achsbewegungen durchgeführt werden;
Anzeigen eines Achsbewegungs-Koordinierungsmenüs (ABKM) mit Optionen zur Eingabe von Koordinierungsparametern zur Definition einer Koordinierung von Bewegungsabläufen der Achsbewegungen von Maschinenachsen;
Empfangen von Eingaben zur Definition von Werten für Koordinierungsparameter.

2. Verfahren nach Anspruch 1, worin das Achsbewegungsmenü ausschließlich positionbezogene Bewegungsparameter enthält, wobei sich die Dauer einer Achsbewegung als abgeleitete Größe aus den eingegebenen Bewegungsparametern ergibt.

3. Verfahren nach Anspruch 1 oder 2, worin der Bewegungsablauf einer Achsbewegung durch einen Startwert für die Startposition am Beginn der Achsbewegung, einen Endwert für die Endposition am Ende der Achsbewegung, sowie einen oder mehrere Bewegungsparameter für die zwischen Startposition und Endposition zu durchlaufende Positionsänderung definiert wird.

4. Verfahren nach einem der vorhergehenden Ansprüche, worin ein Bewegungsgesetz-Menü mit mehreren Optionen zur Auswahl und Eingabe eines Bewegungsgesetz-Typs angezeigt wird, wobei ein Bewegungsgesetz-Typ ausgewählt ist aus der Gruppe mit einer quadratischen Parabel, einem Polynom fünfter Ordnung und einem Polynom achter Ordnung.

5. Verfahren nach einem der vorhergehenden Ansprüche, worin zur Anzeige und/oder Eingabe eines Bewegungsparameters ein Anzeige/Eingabefeld angezeigt wird und der Bewegungsparameter in Form eines numerischen Eingabewerts oder in Form einer Auswahl einer Eingabe aus einer Liste von Eingabeoptionen empfangen oder angezeigt wird.

6. Verfahren nach einem der vorhergehenden Ansprüche, worin im Achsbewegungs-Koordinierungsmenü ein Bewegungsstartmenü mit mindestens einer Option zur Festlegung einer Bedingung für den Start einer Achsbewegung angezeigt oder angeboten wird, wobei für eine Auswahl einer Verknüpfung zu einer bereits eingegebenen Achsbewegung alle bereits eingegebenen Achsbewegungen zur Auswahl angeboten werden, wobei ein Eingabefeld angezeigt oder angeboten wird, welches es erlaubt, die Position der verknüpften Achsbewegung, bei der die aktuell programmierte Achsbewegung starten soll, zu definieren, und/oder wobei das Bewegungsstartmenü eine Option enthält, wonach eine Bewegung direkt am zeitlichen Ursprung des Gesamtablaufs startet.

7. Verfahren nach einem der vorhergehenden Ansprüche, worin im Achsbewegungs-Koordinierungsmenü ein Zeitkorrekturfeld zur Eingabe eines Zeitkorrekturwerts angezeigt wird, wobei durch Eingabe eines endlichen Zeitkorrekturwerts eine zeitliche Verschiebung der Startposition der aktuell programmierten Achsbewegung erzeugbar ist.

8. Verfahren nach einem der vorhergehenden Ansprüche, worin im Achsauswahl-Menü zusätzlich zu den programmierbaren Maschinenachsen eine Maschinenfunktions-Achse angezeigt wird, die eine Definition der Auslösung einer Maschinenfunktion an geeigneter Stelle analog zur Definition einer Achsbewegung erlaubt, wobei bei Auswahl der Maschinenfunktions-Achse ein Maschinenfunktions-Startmenü mit mindestens einer Option zur Definition einer Bedingung für den Start einer Maschinenfunktion angezeigt oder angeboten wird.

9. Verfahren nach einem der vorhergehenden Ansprüche, worin ein Bewegungsabfolgemenü mit mindestens einer Option zur Eingabe eines Bezugs zu einer anderen Achsbewegung angezeigt oder angeboten wird, wobei die Optionen eine oder mehrere der folgenden Optionen enthalten:
1) eine Verkettung von Achsbewegungen, wobei die Achsbewegung einer Maschinenachse startet, nachdem die Achsbewegung einer vorhergehenden Maschinenachse ganz oder teilweise erfolgt ist;
2) eine Interpolation von Achsbewegungen, wobei Achsbewegungen mehrerer Maschinenachsen zeitlich parallel zueinander in einem bestimmten Verhältnis untereinander verlaufen, wobei Bewegungsphasen interpolierter Achsbewegungen gleich lang sind;
3) eine durchlaufende Achsbewegung, wobei sich die Maschinenachse während eines gesamten Produktionszyklus mit konstanter Geschwindigkeit bewegt.

10. Verfahren nach einem der vorhergehenden Ansprüche, worin als Reaktion auf eine Eingabe zur Auswahl einer zu programmierenden Maschinenachse ein korrespondierendes Achsbewegungsmenü (ABM) und ein korrespondierendes Achsbewegungs-Koordinierungsmenüs (ABKM) automatisch angezeigt werden, wobei das Achsauswahlmenü (AAM) gemeinsam mit dem Achsbewegungsmenü und dem Achsbewegungs-Koordinierungsmenüs der ausgewählten Maschinenachse angezeigt werden, wobei die ausgewählte Maschinenachse im Achsauswahlmenü mit einer Kennzeichnung hervorgehoben wird.

11. Verfahren nach einem der vorhergehenden Ansprüche, worin als Reaktion auf eine Eingabe zur Definition von Bewegungsparametern die durch die Bewegungsparameter definierte Bewegung der Maschinenachse in dem Achsauswahlmenü grafisch angezeigt wird in Form eines Feldes mit einem normierten Weg-Zeit-Diagramms, das zeitrichtig bezogen auf eine gemeinsame Zeitachse (ZA) angezeigt wird.

12. Verfahren nach einem der vorhergehenden Ansprüche, worin Achsbewegungen und Verknüpfungen zwischen Achsbewegungen in einer gemeinsamen Darstellung bezogen auf eine gemeinsame Zeitachse angezeigt werden, worin für die Zeitachse ein relatives Zeitmaß angezeigt wird.

13. System zur Programmierung der Steuerung einer Umformmaschine, wobei die Umformmaschine mehrere steuerbare Maschinenachsen, eine Steuereinrichtung zur koordinierten Steuerung von Achsbewegungen der Maschinenachsen und eine mit der Steuereinrichtung zum Datenaustausch verbundene Bedieneinheit mit einer zugeordneten Anzeigeeinheit (310) zur Bedienung der Umformmaschine aufweist,
**dadurch gekennzeichnet, dass** das System zur Durchführung des Verfahrens nach einem der Ansprüche 1 bis 12 konfiguriert ist.

14. Umformmaschine (100) mit mehreren steuerbaren Maschinenachsen, einer Steuereinrichtung (200) zur koordinierten Steuerung von Achsbewegungen der Maschinenachsen und einer Bedieneinheit (300) mit einer zugeordneten Anzeigeeinheit (310) zur Bedienung der Umformmaschine, **dadurch gekennzeichnet, dass** die Umformmaschine ein System zur Programmierung nach Anspruch 13 aufweist.

15. Computerprogrammprodukt, welches auf einem computerlesbaren Medium gespeichert oder als Signal verwirklicht ist, wobei das Computerprogrammprodukt, wenn es in den Speicher eines geeigneten Computers geladen und von einem Computer ausgeführt ist bewirkt, dass der Computer bzw. eine durch den Computer gesteuerte Umformmaschine ein Verfahren gemäß einem der Ansprüche 1 bis 12 durchführt.

## Claims

1. Method for programming the control of a forming machine, the forming machine having a plurality of controllable machine axes, a control device for the coordinated control of axial movements of the machine axes, and an operator unit (300) with an associated display unit (310) for operating the forming machine, **characterized in that** the method has the following steps:
a) displaying an axis selection menu (AAM) with graphical symbols for machine axes of the forming machine;
b) receiving an input for selecting a machine axis to be programmed;
c) displaying an axial movement menu (ABM) containing options for the input of position-based movement parameters for definition of a course of movement of the axial movement of the selected machine axis;
d) receiving inputs for definition of position-based movement parameters;
wherein the steps a) through d) are carried out for two or more machine axes for definition of two or more axial movements;
displaying an axial movement coordination menu (ABKM) containing options for the input of coordination parameters for definition of a coordination of courses of movements of axial movements of machine axes;
receiving inputs for definition of values for coordination parameters.

2. Method according to claim 1, wherein the axial movement menu contains position-based movement parameters exclusively, the duration of an axial movement emerging as a derived variable from the input movement parameters.

3. Method according to claim 1 or 2, wherein the course of movements of an axial movement is defined by a start value for the start position at the start of the axial movement, an end value for the end position at the end of the axial movement, and one or more movement parameters for the change in position to be passed through between the start position and the end position.

4. Method according to any of the preceding claims, wherein a movement law menu containing a plurality of options for the selection and input of a movement law type is displayed, a movement law type being selected from the group having a quadratic parabola, a polynomial of fifth order and a polynomial of eighth order.

5. Method according to any of the preceding claims, wherein a display/input field is displayed for the display and/or input of a movement parameter and the movement parameter is received or displayed in the form of a numerical input value or in the form of a selection of an input from a list of input options.

6. Method according to any of the preceding claims, wherein a movement start menu containing at least one option for determining a condition for the start of an axial movement is displayed or offered in the axial movement coordination menu, wherein for selecting a linking to an already input axial movement, all axial movements already input are offered for selection, wherein an input field is displayed or offered which allows to define the position of the linked axial movement at which the currently programmed axial movement is to start, and/or wherein the movement start menu contains an option in accordance with which a movement starts directly at the temporal origin of the entire course.

7. Method according to any of the preceding claims, wherein a time correction field for the input of a time correction value is displayed in the axial movement coordination menu, it being possible to generate a temporal displacement of the start position of the currently programmed axial movement by inputting a finite time correction value.

8. Method according to any of the preceding claims, wherein a machine function axis is displayed in the axis selection menu in addition to the programmable machine axes and allows a definition of the activation of a machine function at a suitable point, similarly to the definition of an axial movement, a machine function start menu containing at least one option for defining a condition for the start of a machine function being displayed or offered when selecting the machine function axis.

9. Method according to any of the preceding claims, wherein a movement sequence menu containing at least one option for the input of a reference to another axial movement is displayed or offered, the options containing one or more of the following options:
1) a stringing of axial movements, wherein the axial movement of one machine axis is started once the axial movement of a preceding machine axis has been performed completely or in part;
2) an interpolation of axial movements, wherein axial movements of a plurality of machine axes extend parallel to one another over time at a specific ratio to one another, movement phases of interpolated axial movements being of equal length;
3) a continuous axial movement, wherein the machine axis moves at constant speed during an entire production cycle.

10. Method according to any of the preceding claims, wherein a corresponding axial movement menu (ABM) and a corresponding axial movement coordination menu (ABKM) are automatically displayed in response to an input for selecting a machine axis to be programmed, the axis selection menu (AAM) being displayed together with the axial movement menu and the axial movement coordination menu of the selected machine axis, the selected machine axis being highlighted in the axis selection menu by a marking.

11. Method according to any of the preceding claims, wherein the movement of the machine axis defined by the movement parameters is displayed graphically in the axis selection menu in response to an input for definition of movement parameters, said movement being displayed in the form of a field containing a normalized path/time diagram which is displayed in a time-correct manner based on a common time axis (ZA).

12. Method according to any of the preceding claims, wherein axial movements and links between axial movements are displayed in a common illustration based on a common time axis, wherein a relative time measure is displayed for the time axis.

13. System for programming the control of a forming machine, the forming machine having a plurality of controllable machine axes, a control device for the coordinated control of axial movements of the machine axes, and an operator unit connected to the control device for data exchange with an associated display unit (310) for operating the forming machine, **characterized in that** the system is configured to carry out the method according to one of Claims 1 to 12.

14. Forming machine (100), having a plurality of controllable machine axes, a control device (200) for the coordinated control of axial movements of the machine axes and an operator unit (300) with an associated display unit (310) for operating the forming machine, **characterized in that** the forming machine comprises a system for programming according to Claim 13.

15. Computer program product which is stored on a computer-readable medium or is implemented as a signal, wherein the computer program product, when loaded into the memory of a suitable computer and run by a computer, causes the computer or a forming machine controlled by the computer to carry out a method according to one of Claims 1 to 12.

## Revendications

1. Procédé permettant de programmer la commande d'une machine de formage, la machine de formage présentant plusieurs axes de machine pouvant être commandés, un dispositif de commande pour la commande coordonnée des mouvements d'axe des axes de machine et une unité d'actionnement (300) dotée d'une unité d'affichage (310) associée pour actionner la machine de formage, **caractérisé en ce que** le procédé comprend les étapes suivantes consistant à :
a) afficher un menu de sélection d'axe (AAM) avec des symboles graphiques pour les axes de machine de la machine de formage ;
b) recevoir une entrée pour sélectionner un axe de machine à programmer ;
c) afficher un menu de mouvement d'axe (ABM) avec des options pour entrer des paramètres de mouvement liés à la position afin de définir une séquence de mouvements du mouvement d'axe de l'axe de machine sélectionné ;
d) recevoir des entrées pour définir des paramètres de mouvement liés à la position ;
les étapes a) à d) étant effectuées pour deux ou plusieurs axes de machine afin de définir deux ou plusieurs mouvements d'axe ;
afficher un menu de coordination de mouvements d'axe (ABKM) avec des options pour entrer des paramètres de coordination afin de définir une coordination de séquences de mouvement des mouvements d'axe des axes de machine ;
recevoir des entrées pour définir des valeurs pour des paramètres de coordination.

2. Procédé selon la revendication 1, dans lequel le menu de mouvement d'axe contient exclusivement des paramètres de mouvement liés à la position, la durée d'un mouvement d'axe résultant des paramètres de mouvement entrés, sous la forme d'une grandeur dérivée.

3. Procédé selon la revendication 1 ou 2, dans lequel la séquence de mouvements d'un mouvement d'axe est définie par une valeur de départ pour la position de départ au début du mouvement d'axe, une valeur de fin pour la position de fin à la fin du mouvement d'axe, ainsi que par un ou plusieurs paramètres de mouvement pour le changement de position à parcourir entre la position de départ et la position de fin.

4. Procédé selon l'une quelconque des revendications précédentes, dans lequel un menu de lois de mouvement avec plusieurs options pour sélectionner et entrer un type de loi de mouvement est affiché, un type de loi de mouvement étant sélectionné dans le groupe comprenant une parabole quadratique, un polynôme du cinquième ordre ou un polynôme du huitième ordre.

5. Procédé selon l'une quelconque des revendications précédentes, dans lequel un champ d'affichage/d'entrée est affiché pour afficher et/ou entrer un paramètre de mouvement, et le paramètre de mouvement est reçu ou affiché sous la forme d'une valeur d'entrée numérique ou sous la forme d'une sélection d'une entrée sur la liste d'options d'entrée.

6. Procédé selon l'une quelconque des revendications précédentes, dans lequel un menu de départ de mouvement avec au moins une option pour établir une condition pour le départ d'un mouvement d'axe est affiché ou proposé dans le menu de coordination de mouvement d'axe, dans lequel tous les mouvements d'axe déjà entrés sont proposés à la sélection pour sélectionner un lien avec un mouvement d'axe déjà entré, dans lequel un champ d'entrée est affiché ou proposé qui permet de définir la position du mouvement d'axe lié où le mouvement d'axe actuellement programmé doit commencer, et/ou le menu de départ de mouvement contient une option selon laquelle un mouvement commence directement à l'origine temporelle de la séquence globale.

7. Procédé selon l'une quelconque des revendications précédentes, dans lequel un champ de correction de temps pour entrer une valeur de correction de temps est affiché dans le menu de coordination de mouvement d'axe, une entrée d'une valeur de correction de temps finie permettant de produire un décalage dans le temps de la position de départ du mouvement d'axe actuellement programmé.

8. Procédé selon l'une quelconque des revendications précédentes, dans lequel, dans le menu de sélection d'axe, en plus des axes de machine programmables, un axe de fonction de machine est affiché qui permet de définir la résolution d'une fonction de machine à un endroit approprié, comme pour la définition d'un mouvement d'axe, dans lequel un menu de départ de fonction de machine avec au moins une option pour définir une condition pour le départ d'une fonction de machine est affiché ou proposé au moment de la sélection de l'axe de fonction de machine.

9. Procédé selon l'une quelconque des revendications précédentes, dans lequel un menu de séquence de mouvements avec au moins une option pour entrer une relation avec un autre mouvement d'axe est affiché ou proposé, les options comprenant une ou plusieurs des options suivantes :
1) un enchaînement de mouvements d'axe, dans lequel le mouvement d'axe d'un axe de machine commence après que le mouvement d'axe d'un axe de machine précédent a été effectué entièrement ou partiellement ;
2) une interpolation de mouvements d'axe, les mouvements d'axe de plusieurs axes de machine se déroulant en parallèle dans le temps dans une certaine relation les uns par rapport aux autres, les phases de mouvement de mouvements d'axe interpolés ayant la même durée ;
3) un mouvement d'axe en continu, dans lequel l'axe de machine se déplace à vitesse constante pendant un cycle de production entier.

10. Procédé selon l'une quelconque des revendications précédentes, dans lequel, en réponse à une entrée pour sélectionner un axe de machine à programmer, un menu de mouvement d'axe (ABM) correspondant et un menu de coordination de mouvement d'axe (ABKM) correspondant sont affichés automatiquement, le menu de sélection d'axe (AAM) étant affiché en même temps que le menu de mouvement d'axe et le menu de coordination de mouvement d'axe de l'axe de machine sélectionné, l'axe de machine sélectionné étant mis en évidence par un marquage dans le menu de sélection d'axe.

11. Procédé selon l'une quelconque des revendications précédentes, dans lequel, en réponse à une entrée pour définir des paramètres de mouvement, le mouvement de l'axe de machine, défini par les paramètres de mouvement, est affiché dans le menu de sélection d'axe de manière graphique sous la forme d'un champ avec un diagramme chemin/temps normalisé qui est affiché à l'instant correct par rapport à un axe de temps commun (ZA) .

12. Procédé selon l'une quelconque des revendications précédentes, dans lequel les mouvements d'axe et les liens entre les mouvements d'axe sont affichés dans une représentation commune par rapport à un axe de temps commun, une mesure de temps relative étant affichée pour l'axe de temps.

13. Système permettant de programmer la commande d'une machine de formage, la machine de formage présentant plusieurs axes de machine pouvant être commandés, un dispositif de commande pour la commande coordonnée des mouvements d'axe des axes de machine, et une unité d'actionnement reliée au dispositif de commande pour échanger des données avec une unité d'affichage associée (310) afin d'actionner la machine de formage,
**caractérisé en ce que** le système est configuré pour effectuer le procédé selon l'une quelconque des revendications 1 à 12.

14. Machine de formage (100), comprenant plusieurs axes de machine pouvant être commandés, un dispositif de commande (200) pour la commande coordonnée des mouvements d'axe des axes de machine, et une unité d'actionnement (300) dotée d'une unité d'affichage (310) associée pour actionner la machine de formage, **caractérisée en ce que** la machine de formage présente un système de programmation selon la revendication 13.

15. Produit de programme informatique qui est stocké sur un support lisible par ordinateur ou est réalisé sous forme de signal, le produit de programme informatique, lorsqu'il est chargé dans la mémoire d'un ordinateur adapté et exécuté par un ordinateur, amenant l'ordinateur ou une machine de formage commandée par l'ordinateur à effectuer un procédé selon l'une quelconque des revendications 1 à 12.
